# EUROPÄISCHE PATENTSCHRIFT

(11) **EP 4 638 212 B1**
(45) Veröffentlichungstag und Bekanntmachung des Hinweises auf die Patenterteilung: **28.10.2026**
(21) Anmeldenummer: 23817097.1
(22) Anmeldetag: 30.11.2023
(51) Int. Cl.: B60T 8/17, B60T 8/1766, B60T 13/58

(54) **VERFAHREN ZUM LIMITIEREN EINER DAUERVERZÖGERUNGSLEISTUNG EINER DAUERVERZÖGERUNGSEINRICHTUNG**
METHOD FOR LIMITING A CONTINUOUS DECELERATION EFFORT OF A CONTINUOUS DECELERATION DEVICE
PROCÉDÉ DE LIMITATION D'UN EFFORT DE DÉCÉLÉRATION CONTINU D'UN DISPOSITIF DE DÉCÉLÉRATION CONTINUE

(30) Priorität: 20.12.2022 DE 102022134143
(43) Veröffentlichungstag der Anmeldung: 29.10.2025
(73) Patentinhaber: ZF CV Systems Global GmbH, 3006 Bern (CH)
(72) Erfinder: BIEBER, Benjamin, 30900 Wedemark (DE); BÖTTCHER, Jonas, 30455 Hannover (DE); PLÄHN, Klaus, 30926 Seelze (DE); WULF, Oliver, 31535 Neustadt (DE)
(74) Vertreter: Rabe, Dirk-Heinrich
(86) Internationale Anmeldenummer: PCT/EP2023/083709
(87) Internationale Veröffentlichungsnummer: WO 2024/132442

(56) Entgegenhaltungen:
- EP-A1- 3 381 774
- WO-A1-93/18949
- DE-A1- 102017 011 802

## Beschreibung

Die Erfindung betrifft ein Verfahren zum Steuern eines Fahrzeugzugs, mit einem Zugfahrzeug und zumindest einem Anhängerfahrzeug, wobei das Zugfahrzeug eine Dauerverzögerungseinrichtung aufweist. Die Dauerverzögerungseinrichtung ist zum Durchführen einer Dauerverzögerung des Fahrzeugzugs vorgesehen. Ferner betrifft die Erfindung ein Fahrerassistenzsystem, das zum Ausführen des Verfahrens ausgebildet ist, ein Nutzfahrzeug und ein Computerprogrammprodukt.

Um ein Fahrzeug abzubremsen ist aufgrund des hohen Gewichts eine große Bremsleistung erforderlich. Insbesondere bei Nutzfahrzeugen können in bestimmten Fahrsituationen, wie langen Gefällestrecken, Betriebsbremsen des Fahrzeugs sehr hohe Temperaturen erreichen. Dies resultiert daraus, dass klassische Betriebsbremsen meist als Reibbremsen ausgebildet sind, die kinetische Energie des Fahrzeugs in thermische Energie umwandeln. Insbesondere bei langen Gefällestrecken oder starkem Gefälle kann dies dazu führen, dass die Betriebsbremsen eines Nutzfahrzeugs Temperaturen von 400 °C oder mehr erreichen. Bei solchen Temperaturen fällt ihre Bremswirkung meist stark ab, sodass ein sicheres Bremsen des Fahrzeugs unter Umständen nicht mehr gewährleistet ist. Ferner führt ein langandauernder Einsatz der Reibbremsen zu einem hohen Bremsenverschleiß, woraus hohe Betriebskosten resultieren. Aus diesen Gründen weisen insbesondere Nutzfahrzeuge häufig eine im Wesentlichen verschleißfrei wirkende Dauerverzögerungseinrichtung auf, die in bestimmten Bauformen auch als Retarder bezeichnet wird. Die Dauerverzögerungseinrichtung arbeitet dabei häufig als hydrodynamische Dauerverzögerungseinrichtung oder als elektrodynamische Verzögerungseinrichtung, die auch als Rekuperator bezeichnet wird. Eine solche Dauerverzögerungseinrichtung bremst das Fahrzeug sicher und verschleißfrei ab, sodass die Betriebsbremsen des Fahrzeugs geschont werden und in Notsituationen voll einsatzbereit bleiben. Aus diesen Gründen sind Dauerbremseinrichtungen für Busse und Lastkraftwagen (LKW) in vielen europäischen Ländern gesetzlich vorgeschrieben.

Eine Dauerverzögerungseinrichtung verzögert unmittelbar nur einen Fahrzeugteil, an dem diese installiert ist. Insbesondere bewirkt eine Dauerverzögerungseinrichtung nur an Rädern einer Achse einen Bremsschlupf, an denen die Dauerverzögerungseinrichtung angeordnet ist. Weitere Fahrzeugteile, die keine Dauerverzögerungseinrichtung aufweisen, werden hingegen nicht unmittelbar von der Dauerverzögerungseinrichtung beeinflusst. Eine die Verzögerung bewirkende Bremskraft muss daher vom gebremsten Fahrzeugteil auf den ungebremsten bzw. von der Dauerverzögerungseinrichtung unabhängigen Fahrzeugteil übertragen werden. Dieses Übertragen von Bremskräften führt dazu, dass von der Dauerverzögerungseinrichtung unbeeinflusste Fahrzeugteile eine Instabilität des gesamten Fahrzeugzugs bewirken können.

Die WO93/18949A1 offenbart ein elektronisches Bremssystem für ein Fahrzeug mit Basisbremsen und einem Fahrzeugretarder, wobei ein elektrisches Bremsanforderungssignal von einem einzigen Bremspedal erzeugt wird und wobei der Retarder variabel oder in kleinen Schritten betätigt wird, wenn die Bremspedalbewegung von **Null** oder Ruhezustand bis zu einem Teilpunkt in seinem Bewegungsbereich erhöht wird, der so berechnet ist, dass er im Wesentlichen die maximale Retarderleistung basierend auf der Gesamtmasse des Fahrzeugs ergibt, so dass dieser Teilpunkt bei voller Beladung bei geringer Pedalauslenkung auftritt und in unbeladenem Zustand, in dem ein bestimmter Retarder eine höhere Verzögerung erzeugt, dieser Punkt bei einer höheren Pedalauslenkung auftritt, und in beiden Fällen bewirkt das Drücken des Pedals über den berechneten Teilpunkt hinaus, dass eine Basisbremsung eingeleitet wird, um das Retarderdrehmoment zu ergänzen.

Häufig ist die Dauerverzögerungseinrichtung in einem Zugfahrzeug des Fahrzeugzugs angeordnet während korrespondierende Anhängerfahrzeuge meist keine eigene Dauerverzögerungseinrichtung aufweisen. Da das Anhängerfahrzeug und das Zugfahrzeug in der Regel mittels einer starren Deichsel verbunden sind, kann das Anhängerfahrzeug nicht auf das Zugfahrzeug auffahren, sondern überträgt mittels der Deichsel Kräfte auf das Zugfahrzeug. Dies kann beispielsweise dazu führen, dass der Fahrzeugzug einknickt und/oder das das Zugfahrzeug durch die am Heck angreifenden Kräfte destabilisiert wird. Bei Verwendung einer Dauerbremseinrichtung im Anhängerfahrzeug, kann ein Überbremsen bzw. eine zu starke Verzögerung des Anhängerfahrzeugs im Vergleich zum Zugfahrzeug auch zu einer Instabilität des Anhängerfahrzeugs führen.

Zum Vermeiden dieser Destabilisierung müssen die von der Dauerverzögerungseinrichtung unabhängigen Fahrzeugteile gegebenenfalls mittels Ihrer Betriebsbremsen reaktiv eine Verzögerungsleistung aufbringen. So wird gegebenenfalls zum Vermeiden von Instabilitäten in Abhängigkeit einer von der Dauerverzögerungseinrichtung bereitgestellten Dauerverzögerungsleistung an Betriebsbremsen von Achsen, die von der Dauerverzögerungseinrichtung unabhängig sind, zusätzlich ein Bremsschlupf ausgesteuert. Dies erfolgt jedoch ausschließlich reaktiv in Abhängigkeit der gewählten Dauerverzögerung. Ein Risiko für Instabilitäten des Fahrzeugzugs kann so zwar reduziert werden, bleibt aber dennoch in nicht unerheblichem Maße bestehen. Es besteht daher der Bedarf nach Verfahren zum Steuern von Fahrzeugzügen, die eine verbesserte Sicherheit bereitstellen.

Der Erfindung liegt die Aufgabe zugrunde, ein Verfahren zum Steuern eines Fahrzeugzugs, ein Fahrerassistenzsystem, ein Nutzfahrzeug und/oder ein Computerprogrammprodukt anzugeben, das eine erhöhte Sicherheit bietet.

In einem ersten Aspekt wird die Aufgabe gelöst durch ein Verfahren zum Steuern eines Fahrzeugzugs, mit einem Zugfahrzeug und zumindest einem Anhängerfahrzeug, wobei das Zugfahrzeug eine Dauerverzögerungseinrichtung aufweist, die zum Durchführen einer Dauerverzögerung vorgesehen ist, das Verfahren aufweisend: Ermitteln einer Anhängermasse des Anhängerfahrzeugs in der gegenwärtigen Fahrzeugkonfiguration des Fahrzeugzugs; Ermitteln einer Zugfahrzeugmasse des Zugfahrzeugs in der gegenwärtigen Fahrzeugkonfiguration; Ermitteln eines Masseverhältnisses der gegenwärtigen Fahrzeugkonfiguration basierend auf der Anhängermasse und der Zugfahrzeugmasse; und Limitieren einer zulässigen Dauerverzögerungsleistung der Dauerverzögerungseinrichtung basierend auf dem Masseverhältnis.

Die Dauerverzögerungseinrichtung ist dazu vorgesehen, eine langandauernde Verzögerung zumindest eines Teilfahrzeugs des Fahrzeugzugs bereitzustellen. Die langandauernde Verzögerung beziehungsweise die Dauerverzögerung ist vorzugsweise verschleißfrei oder verschleißarm. Bevorzugt ist die Dauerverzögerungseinrichtung eine Dauerbremseinrichtung des Fahrzeugzugs, die auch als Retarder bezeichnet werden kann. Alternativ oder ergänzend kann die Dauerverzögerungseinrichtung auch eine Rekuperationseinrichtung sein. Eine Rekuperationseinrichtung ist dazu ausgebildet, eine Verzögerung bereitzustellen und dabei kinetische Energie in elektrische Energie zu wandeln. Die Erfindung basiert auf der Erkenntnis, dass ein Risiko für das Auftreten von Instabilitäten eines Fahrzeugzugs beziehungsweise einzelner Fahrzeugteile eines Fahrzeugzugs im Wesentlichen von einer gegenwärtigen Fahrzeugkonfiguration des Fahrzeugzugs beeinflusst ist. Die gegenwärtige Fahrzeugkonfiguration betrifft sowohl fahrzeugspezifische Aspekte als auch ladungsspezifische Aspekte. Neben geometrischen Charakteristika des Fahrzeugzugs, wie beispielsweise Radständen, Spurbreiten, Achsabständen und Deichsellängen, beeinflussen auch Lastcharakteristika des Fahrzeugzugs dessen Stabilitätsverhalten. So hat insbesondere ein Masseverhältnis der gegenwärtigen Fahrzeugkonfiguration einen großen Einfluss auf das Stabilitätsverhalten des Fahrzeugzugs. Beispielsweise neigt ein erster Fahrzeugzug, dessen Anhängerfahrzeug schwer beladen ist während dessen Zugfahrzeug leer ist, in der Regel deutlich früher zu Instabilitäten als ein geometrisch identischer zweiter Fahrzeugzug, dessen Zugfahrzeug beladen und dessen Anhängerfahrzeug leer ist. Das Masseverhältnis beeinflusst daher wesentlich das Stabilitätsverhalten des Fahrzeugzugs. Dies Erkenntnis macht sich die Erfindung zunutze, um ein Verfahren zum Steuern eines Fahrzeugzugs anzugeben, das präventiv Instabilitäten verhindert und/oder ein Risiko für das Auftreten von Instabilitäten reduziert. So wird die zulässige Dauerverzögerungsleistung der Dauerverzögerungseinrichtung im erfindungsgemäßen Verfahren zumindest basierend auf dem Masseverhältnis limitiert. Durch das Limitieren der Dauerverzögerungsleistung kann verhindert werden, dass die Dauerbremseinrichtung den Fahrzeugzug in einem Maß verzögert, das eine Instabilität des Fahrzeugzugs hervorruft. So kann beispielsweise ein Einknicken des Zugfahrzeugs verhindert werden, bei dem das Zugfahrzeug so stark abgebremst wird, dass ein schwer beladenes Anhängerfahrzeug auf das Zugfahrzeug aufschiebt und ein Knickwinkel zwischen Zugfahrzeug und Anhängerfahrzeug sehr groß wird.

Basierend auf dem Masseverhältnis wird also ein Limit für die von der Dauerverzögerungseinrichtung bereitstellbare Dauerverzögerungsleistung gesetzt. Das Limit ist eine maximal zulässige Dauerverzögerungsleistung, die von der Dauerverzögerungseinrichtung bereitgestellt werden kann. Beispielsweise kann die Dauerverzögerungsleistung auf ein Limit von 600 kW beschränkt sein, obwohl die Dauerverzögerungseinrichtung technisch zum Bereitstellen höherer Dauerverzögerungsleistungen, beispielsweise 700 kW, ausgebildet ist. Vorzugsweise kann das Limitieren einer zulässigen Dauerverzögerungsleistung auch mittelbar durch Limitieren eines zulässigen Verzögerungsmoments erfolgen. Das Limitieren kann ein Vorgeben eines absoluten Limits sein und/oder ein relatives Limitieren. Beim relativen Limitieren ist das definierte Limit ein relativer Anteil, insbesondere ein Prozentwert, einer technisch maximal von der Dauerverzögerungseinrichtung bereitstellbaren Dauerverzögerungsleistung. Wenn beispielsweise eine Dauerverzögerungseinrichtung technisch dazu eingerichtet ist, eine maximale Dauerverzögerungsleistung von 700 kW bereitzustellen, dann kann die zulässige Dauerverzögerungsleistung einen relativen Wert von 50% dieser technisch maximalen Dauerverzögerungsleistung haben. In diesem Fall ist die zulässige Dauerverzögerungsleistung auf 350 kW limitiert.

Limitieren ist im Umfang der vorliegenden Offenbarung derart zu verstehen, dass das Limit auch einer technisch maximal bereitstellbaren Bremsleistung der Dauerverzögerungseinrichtung entsprechen kann. Das Limitieren entspricht nicht zwingend einer Beschränkung der Dauerverzögerungsleistung. Es kann auch vorgesehen sein, dass beim Limitieren eine Dauerverzögerungsleistung definiert wird, die der technisch maximal von der Dauerverzögerungseinrichtung bereitstellbaren Dauerverzögerungsleistung entspricht oder sogar größer ist. Dies kann beispielsweise der Fall sein, wenn das Masseverhältnis des Fahrzeugzugs vollkommen unkritisch ist. In diesem Fall kann ein Limitieren erfolgen, dieses Limitieren hat dann aber keinen Einfluss auf das tatsächliche Fahrverhalten des Fahrzeugzugs, da das Limit der Dauerverzögerungsleistung der technisch maximal möglichen Dauerverzögerungsleistung entspricht.

Das Massenverhältnis ist im Rahmen der vorliegenden Offenbarung vorzugsweise ein Quotient, wobei die Anhängermasse den Dividenden und eine Gesamtfahrzeugmasse, die eine Summe aus der Anhängermasse und der Zugfahrzeugmasse ist, den Divisor bildet (Anhängermasse/Fahrzeuggesamtmasse=Anhängermasse/(Zugfahrzeugmasse+Anhängermasse)=Massenverhältnis). Es soll jedoch verstanden werden, dass das Massenverhältnis auch anders definiert sein kann, ohne vom Erfindungsgedanken abzuweichen. Beispielsweise kann die Anhängermasse der Dividend und die Zugfahrzeugmasse der Divisor sein (Anhängermasse/Zugfahrzeugmasse=Massenverhältnis).

Das Ermitteln der Anhängermasse, Zuggesamtmasse und/oder Zugfahrzeugmasse kann auch eine Approximation sein. Beispielsweise kann eine Approximation mit einem Fehler von 10 % ausreichend sein. Dies ist insbesondere dann vorteilhaft, wenn eine oder mehrere der Massen aufgrund fehlender Messwerte nur abgeschätzt werden können.

In einer ersten bevorzugten Ausführungsform des Verfahrens wird die maximal zulässige Dauerverzögerungsleistung mit steigendem relativen Anteil der Anhängermasse an einer Gesamtmasse des Fahrzeugzugs reduziert. Je schwerer der Anhänger ist beziehungsweise je größer die Anhängermasse ist, desto höher ist bei identischer Zugfahrzeugmasse in der Regel ein Instabilitätsrisiko des Fahrzeugs. Insbesondere die Gefahr eines Einknickens des Fahrzeugzugs, das englisch auch als Jackknifing bezeichnet wird, ist bei vergleichsweise schwerem Anhängerfahrzeug erhöht. Der relative Anteil der Anhängermasse steigt, wenn die Anhängermasse stärker zunimmt als die Zugfahrzeugmasse. Das Risiko des Einknickens ist mit steigendem relativen Anteil der Anhängermasse an der Gesamtmasse des Fahrzeugs erhöht, wobei die Gesamtmasse für einen Fahrzeugzug mit einem Zugfahrzeug und einem Anhängerfahrzeug die Summe aus der Anhängermasse und der Zugfahrzeugmasse ist. Die maximal zulässige Dauerverzögerungsleistung wird mit steigendem relativen Anteil der Anhängermasse reduziert, sodass eine umso geringere zulässige Dauerverzögerungsleistung von der Dauerverzögerungseinrichtung bereitstellbar ist, je höher der relative Anteil der Anhängermasse ist. Bei gleicher Zugfahrzeugmasse kann bei einem schweren Anhänger beispielsweise eine maximale zulässige Dauerverzögerungsleistung auf 300 kW limitiert sein während bei einem unbeladenen Anhänger eine maximale zulässige Dauerverzögerungsleistung von 700 kW möglich ist. Gemäß der oben gegebenen Definition nimmt das Masseverhältnis mit steigendem relativen Anteil der Anhängermasse ab.

Die zulässige Dauerbremsleistung kann vorzugsweise eine untere Schwelle aufweisen, die nicht unterschritten werden kann. Beispielsweise kann die untere Schwelle 5 % einer technisch maximalen Dauerbremsleistung der Dauerbremseinrichtung betragen. Wenn die technisch maximale Dauerbremsleistung einen Wert von 1000 kW hat, kann die untere Schwelle demnach auf 50 kW festgelegt sein. Unterhalb dieser Schwelle wird die maximal zulässige Dauerverzögerungsleistung dann vorzugsweise auch mit steigendem relativen Anteil der Anhängermasse nicht weiter reduziert.

Vorzugsweise weist das Verfahren ferner auf: Ermitteln einer Kupplungslänge für eine Kupplungskraft, die in einem Betrieb des Fahrzeugzugs zwischen dem Zugfahrzeug und dem Anhängerfahrzeug wirkt, und Limitieren der maximal zulässigen Dauerverzögerungsleistung der Dauerverzögerungseinrichtung zusätzlich basierend auf der Kupplungslänge. Vorzugsweise wird die maximal zulässige Dauerverzögerungsleistung mit steigender Kupplungslänge zunehmend limitiert. Die maximal zulässige Dauerverzögerungsleistung ist also vorzugsweise indirekt proportional zur Kupplungslänge. Die Kupplungskraft ist eine im Betrieb des Fahrzeugzugs zwischen dem Zugfahrzeug und dem Anhängerfahrzeug wirkende Kraft. Beispielsweise überträgt das Zugfahrzeug bei einer Beschleunigung des Nutzfahrzeugs eine Zugkraft auf das Anhängerfahrzeug. Wenn das Zugfahrzeug hingegen stärker verzögert wird als das Anhängerfahrzeug, dann überträgt das Anhängerfahrzeug gegebenenfalls eine Schubkraft als Kupplungskraft auf das Zugfahrzeug. Insbesondere in diesem Fall ist eine Wirkung auf den Fahrzeugzug insgesamt und das Zugfahrzeug im Speziellen auch von einer Hebelarmlänge eines Hebelarms der Kupplungskraft abhängig. Dieser Hebelarm ist zum einen Abhängig von einem Knickwinkel, der zwischen dem Anhängerfahrzeug und dem Zugfahrzeug gebildet ist, und zum anderen von der Kupplungslänge. Die Kupplungslänge ist vorzugsweise ein Abstand zwischen einem Kupplungspunkt des Zugfahrzeugs und der in Fahrtrichtung des Fahrzeugs letzten Achse des Zugfahrzeugs. Bei großem Hebelarm bewirkt eine identische Kupplungskraft ein größeres Reaktionsmoment auf das Zugfahrzeug als bei kleinem Hebelarm. Für einen identischen Knickwinkel nimmt der Hebelarm der Kupplungskraft mit steigender Kupplungslänge zu. Durch Limitieren der maximal zulässigen Dauerverzögerungsleistung basierend auf der Kupplungslänge wird mittelbar auch der Einfluss des Hebelarms auf ein Reaktionsmoment zwischen Zugfahrzeug und Anhängerfahrzeug berücksichtigt, da die Kupplungslänge den Hebelarm mitbestimmt. Das Limitieren der maximal zulässigen Dauerverzögerungsleistung basierend auf der Kupplungslänge und basierend auf dem Masseverhältnis kann im einfachsten Fall durch Addieren der Limitierungen erfolgen. So kann die maximal zulässige Dauerverzögerungsleistung basierend auf dem Masseverhältnis um 10% limitiert werden und basierend auf der Kupplungslänge um 15%, sodass sich eine gesamte Limitierung von 25% ergibt. In diesem Fall hat die maximal zulässige Dauerverzögerungsleistung dann einen relativen Wert von 75%. Es kann aber auch vorgesehen, dass zum Limitieren der maximal zulässigen Dauerverzögerungsleistung ein anderer (gegebenenfalls formelmäßiger) Zusammenhang der Einflussfaktoren gewählt wird.

In einer bevorzugten Weiterbildung weist das Ermitteln der Kupplungslänge auf: Ermitteln eines Liftstatus einer Liftachse des Zugfahrzeugs; Ermitteln eines Anhängertyps des Anhängerfahrzeugs, Ermitteln eines Kupplungspunkts unter Verwendung des Anhängertyps; Ermitteln einer in einer Fahrtrichtung hintersten Achse des Zugfahrzeugs, wobei das Ermitteln der in Fahrtrichtung hintersten Achse vorzugsweise unter Verwendung des Liftstatus der Liftachse erfolgt; und Ermitteln der Kupplungslänge als Abstand zwischen der in Fahrtrichtung hintersten Achse und dem Kupplungspunkt des Zugfahrzeugs, wobei der Abstand in einer Fahrzeuglängsrichtung ermittelt wird. Der Kupplungspunkt ist der Ort, an dem das Anhängerfahrzeug an das Zugfahrzeug angekuppelt wird. Moderne Zugfahrzeuge haben meist zwei Kupplungen, um entweder einen Zentralachsanhänger oder einen Deichselanhänger ankuppeln zu können. Durch Ermitteln des Anhängertyps (Zentralachsanhänger oder Deichselanhänger) kann ermittelt werden, welche Kupplung verwendet wird und so auch, wo der Kupplungspunkt liegt. Eine Position des Kupplungspunkts kann daher unter Verwendung des Anhängertyps ermittelt werden. Vorzugsweise erfolgt das Ermitteln des Anhängertyps basierend auf Anhängersignalen, die auf einem Fahrzeugnetzwerk, vorzugsweise einem Fahrzeugbussystem, besonders bevorzugt einem ISO 11992 Bussystem bereitgestellt werden. Am Kupplungspunkt überträgt das Anhängerfahrzeug Kräfte auf das Zugfahrzeug. Die in Fahrtrichtung hinterste Achse des Zugfahrzeugs ist diejenige Achse, die bei regulärer Geradeausfahrt des Fahrzeugs einen auf der Bewegungsbahn des Fahrzeugs liegenden Punkt als letzte der Achsen des Zugfahrzeugs überfährt. Anstelle der in Fahrtrichtung hintersten Achse kann auch eine Position einer Achsgruppenmitte einer Hinterachsgruppe des Zugfahrzeugs ermittelt und beim Ermitteln der Kupplungslänge verwendet werden. Um große Lasten transportieren zu können, umfassen Nutzfahrzeuge häufig mehrere nahe beieinanderliegende Achsen (meist Hinterachsen), auf die die angreifenden Lasten verteilt werden. Die Hinterachsgruppe bezeichnet die Hinterachsen des Zugfahrzeugs als Teil eines Achsaggregats, wobei zwei nahe beieinanderliegende Hinterachsen eine Doppelachse bilden, drei Hinterachsen eine Dreifachachse bilden. Es soll verstanden werden, dass aber auch eine einzelne Hinterachse eine Achsgruppe bilden kann. Die Achsgruppenmitte einer solchen Hinterachsgruppe des Fahrzeugs definiert näherungsweise einen fahrdynamisch relevanten Aufstandspunkt des Fahrzeugs, wobei die Achsgruppenmitte in Längsrichtung der Mittelpunkt zwischen den Hinterachsen der Hinterachsgruppe ist. Bei zwei Achsen ist die Achsgruppenmitte beispielsweise der Mittelpunkt zwischen den beiden Achsen in Fahrzeuglängsrichtung. Aufgrund der hohen fahrdynamischen Relevanz der Achsgruppenmitte für eine Fahrdynamik von Zufahrzeug und Fahrzeugzug, eignet sich ein Abstand zwischen der Achsgruppenmitte und dem als Kraftangriffspunkt wirkenden Kupplungspunkt besonders als relevante zu betrachtende Kupplungslänge. Es soll jedoch verstanden werden, dass die Kupplungslänge auch anders definiert sein kann. Häufig weisen Nutzfahrzeuge eine sogenannte Liftachse auf, die angehoben bzw. geliftet werden kann, wobei die Liftachse im angehobenen Zustand nicht auf der Fahrbahn aufliegt. Der Liftstatus gibt zumindest an, ob die Liftachse angehoben oder abgesenkt ist. Da die Liftachsen häufig Teil der Hinterachsgruppe sind, verändert sich beim Anheben beziehungsweise Absenken der Liftachse auch die Lage der Achsgruppenmitte.Wenn die Liftachse eine Nachlaufachse ist, ist die Liftachse nach dem Absenken in der Regel eine hinterste Achse des Fahrzeugs, Analog verschiebt sich die Achsgruppenmitte beim Absenken der Liftachse in Richtung des Kupplungspunkts. Es ist daher vorteilhaft den Liftstatus beim Ermitteln der in Fahrtrichtung hintersten Achse oder der Position der Achsgruppenmitte zu berücksichtigen. Es soll verstanden werden, dass beim Ermitteln der Position der Achsgruppenmitte nur eine Position in Fahrzeuglängsrichtung ermittelt werden kann und/oder dass die Position nur relativ mit Bezug zum Fahrzeug erfolgen kann.

Bevorzugt weist das Verfahren ferner auf: Ermitteln einer Kurvenkrümmung einer von dem Fahrzeugzug zu befahrenden Fahrbahn; und Limitieren der zulässigen Dauerverzögerungsleistung der Dauerverzögerungseinrichtung zusätzlich basierend auf der ermittelten Kurvenkrümmung. Die Kurvenkrümmung entspricht dem reziproken Wert des Kurvenradius einer von der Fahrbahn beschriebenen Kurve. Eine große Kurvenkrümmung entspricht einem kleinen Kurvenradius. Insbesondere bei starken Kurvenkrümmungen (engen Kurven mit kleinen Kurvenradien) ist ein Risiko für Instabilitäten erhöht. Durch Limitieren der Dauerverzögerungsleistung zusätzlich basierend auf der ermittelten Kurvenkrümmung kann ein weiterer Zugewinn an Sicherheit erreicht werden. So kann beispielsweise eine zusätzliche Limitierung der maximal zulässigen Dauerverzögerungsleistung von 10% vorgegeben werden, wenn die Kurvenkrümmung der zu befahrenden Fahrbahn einen vordefinierten Mindestradius unterschreitet. Die Limitierung basierend auf der Kurvenkrümmung kann zu auf anderen Einflussfaktoren basierenden Limitierungen hinzuaddiert werden. Es kann aber auch vorgesehen sein, dass mehrere Einflussfaktoren gemeinsam beim Limitieren der maximal zulässigen Dauerverzögerungsleistung der Dauerverzögerungseinrichtung berücksichtigt werden. Beispielsweise können die ermittelte Kurvenkrümmung, das Masseverhältnis und/oder die Kupplungslänge auch gewichtet werden. Vorzugsweise umfasst das Ermitteln einer Kurvenkrümmung ein Ermitteln einer Trajektorie des Fahrzeugzugs und ein Ermitteln der Kurvenkrümmung unter Verwendung der Trajektorie. Die Trajektorie wird vorzugsweise von einer autonomen Einheit, die auch als virtueller Fahrer bezeichnet werden kann, ermittelt.

Gemäß einer bevorzugten Weiterbildung weist das Verfahren ferner auf: Ermitteln eines Knickwinkels zwischen Zugfahrzeug und Anhängerfahrzeug; und Limitieren der maximal zulässigen Dauerverzögerungsleistung der Dauerverzögerungseinrichtung, falls der Knickwinkel einen Knickwinkelgrenzwert überschreitet. Der Knickwinkel ist ein zwischen dem Zugfahrzeug und dem Anhängerfahrzeug gebildeter Winkel (Ist-Knickwinkel). Bei stationärer geradeausfahrt hat der Knickwinkel einen Wert von 0°. Mit zunehmendem Knickwinkel zwischen Zugfahrzeug und Anhängerfahrzeug steigt das Risiko für Instabilitäten des Fahrzeugzugs. So ist ein dynamisch wirksamer Hebelarm des Fahrzeugs abhängig von der Kupplungslänge und dem Knickwinkel zwischen Zugfahrzeug und Anhängerfahrzeug. Durch Limitieren der maximal zulässigen Dauerverzögerungsleistung bei großen Knickwinkeln kann ein Einknicken des Fahrzeugzugs verhindert werden. In der Regel sind jedoch nur Knickwinkel relevant, die einen Mindestwert überschreiten, sodass ein Limitieren vorzugsweise erst dann erfolgt, wenn der Knickwinkel den Knickwinkelgrenzwert überschreitet. Es soll jedoch verstanden werden, dass der Knickwinkelgrenzwert auch einen Wert von 0° aufweisen kann. Vorzugsweise wird die maximal zulässige Dauerverzögerungsleistung zusätzlich basierend auf dem Knickwinkel limitiert, wobei das Limitieren analog zu den vorbeschriebenen Einflussfaktoren (Kurvenkrümmung und Kupplungslänge) additiv oder durch simultane Berücksichtigung mehrerer Einflussfaktoren erfolgen kann. Es kann jedoch auch vorgesehen sein, dass bei Überschreiten des Knickwinkelgrenzwerts eine feste Limitierung der maximal zulässigen Dauerverzögerungsleistung erfolgt. Vorzugsweise erfolgt das Limitieren der maximal zulässigen Dauerverzögerungsleistung proportional zum Knickwinkel. Ein großer Knickwinkel bedingt dann eine starke Limitierung. Ein Knickwinkel von 0° entspricht vorzugsweise einer unlimitierten maximal zulässigen Dauerverzögerungsleistung. Vorzugsweise wird die maximal zulässige Dauerverzögerungsleistung auf 0% der technisch möglichen Dauerverzögerungsleistung limitiert, falls der Knickwinkel größer oder gleich 45° ist. Der Knickwinkelgrenzwert hat vorzugsweise einen Wert, der ausgewählt ist aus einem Bereich von 0° bis 20°, vorzugsweise größer 0° bis 20°, vorzugsweise größer 0° bis 10°, besonders bevorzugt größer °0 bis 5°, wobei auch die Randwerte der angegebenen Bereiche bevorzugt sind. Das proportionale Limitieren erfolgt vorzugsweise mit einer Limitierungsrate, die besonders bevorzugt eine Reduzierung von 2,5% je Grad Zunahme des Knickwinkels umfasst.

In einer bevorzugten Weiterbildung weist das Verfahren ferner auf: Ermitteln eines Soll-Knickwinkels zwischen Zugfahrzeug und Anhängerfahrzeug, und Definieren des Knickwinkelgrenzwerts als dynamischer Knickwinkelgrenzwert, der dem Soll-Knickwinkel zuzüglich eines Pufferwinkels entspricht. Der Knickwinkelgrenzwert ist dann kein fester Grenzwert, sondern ein sich in Abhängigkeit des Soll-Knickwinkels verändernder Knickwinkelgrenzwert. Der dynamische Knickwinkelgrenzwert ist vorteilhaft, da im regulären Fahrbetrieb, beispielsweise beim Rangieren des Fahrzeugzugs, auch große Knickwinkel bestehen können, ohne dass ein Instabilitätsrisiko besteht. Durch das Verwenden des dynamischen Knickwinkelgrenzwerts erfolgt eine Limitierung nur dann, wenn der reale Knickwinkel größer ist als der Soll-Knickwinkel. Der Pufferwinkel gleicht etwaige Messungenauigkeiten des Knickwinkels und/oder Fehler beim Ermitteln des Soll-Knickwinkels aus. Der Pufferwinkel kann aber auch einen Wert von 0° haben. Der Soll-Knickwinkel kann vorzugsweise basierend auf zwei oder mehr geometrischen Charakteristika des Fahrzeugzugs und einer Kurvenkrümmung einer zu befahrenden Fahrbahn abgeschätzt werden. Bevorzugt kann der Soll-Knickwinkel basierend auf prädizierten dynamischen Eigenschaften des Fahrzeugzugs und der Krümmung der zu befahrenden Fahrbahn ermittelt werden. Für eine Kurve ist die Krümmung das Inverse des Kurvenradius. Es kann auch vorgesehen sein, dass der Soll-Knickwinkel aus einer oder mehreren geometrischen Charakteristika, einer Ist-Gierrate und einer aktuellen Fahrzeuggeschwindigkeit ermittelt wird. Das Ermitteln des Soll-Knickwinkels kann auch unter Verwendung einer Trajektorie erfolgen, die vorzugsweise von einer autonomen Einheit bereitgestellt wird.

In einer bevorzugten Ausgestaltung weist das Verfahren ferner auf: Ermitteln eines gegenwärtigen Reibschlussbeiwerts für den Fahrzeugzug; und Limitieren der maximal zulässigen Dauerverzögerungsleistung der Dauerverzögerungseinrichtung zusätzlich basierend auf dem gegenwärtigen Reibschlussbeiwert. Bei geringem Reibschlussbeiwert ist eine Haftung zwischen Fahrzeugzug und einer befahrenen Fahrbahn reduziert. Dies ist beispielsweise bei Straßenglätte der Fall. Ein Risiko für eine Instabilität des Fahrzeugzugs ist bei geringem Reibschlussbeiwert häufig erhöht, sodass durch Limitieren der maximal zulässigen Dauerverzögerungsleistung der Dauerverzögerungseinrichtung zusätzlich basierend auf dem gegenwärtigen Reibschlussbeiwert ein weiterer Sicherheitsgewinn erzielt werden kann. So kann die maximal zulässige Dauerverzögerungsleistung bei geringem Reibschlussbeiwert stärker Limitiert sein, als bei durchschnittlichem Reibschlussbeiwert. Das zusätzliche Limitieren erfolgt vorzugsweise durch Addieren einer auf dem Reibschlussbeiwert basierenden Limitierung zu einer auf anderen Einflussfaktoren (Masseverhältnis, Kurvenkrümmung, Kupplungslänge, Knickwinkel) basierenden Limitierung. Es kann aber auch ein komplexer Zusammenhang der verschiedenen Einflussfaktoren auf die Limitierung bestehen.

Es soll verstanden werden, dass das Ermitteln des gegenwärtigen Reibschlussbeiwerts fehlerbehaftet sein kann. Das Ermitteln des gegenwärtigen Reibschlussbeiwerts umfasst also auch eine Approximation des gegenwärtigen Reibschlussbeiwerts. Ferner kann der gegenwärtige Reibschlussbeiwert auch nur qualitativ bestimmt und/oder kategorisiert werden. Bevorzugt ist oder umfasst das Ermitteln des gegenwärtigen Reibschlussbeiwerts ein Ermitteln, ob der gegenwärtige Reibschlussbeiwert einen vordefinierten Standardreibschlussbeiwert unterschreitet und/oder überschreitet. Vorzugsweise umfasst das Ermitteln des Reibschlussbeiwerts ein Ermitteln einer Vergleichsdrehzahl eines Vergleichsrads, ein Ermitteln einer Prüfdrehzahl eines Prüfrads, und ein Ermitteln eines Radschlupfes des Prüfrads basierend auf der ermittelten Prüfdrehzahl und der ermittelten Vergleichsdrehzahl, wobei das Ermitteln der Vergleichsdrehzahl und das Ermitteln der Prüfdrehzahl simultan für zumindest einen Zeitabschnitt erfolgt. Das Vergleichsrad ist vorzugsweise ein im Zeitabschnitt freirollendes Rad des Zugfahrzeugs und das Prüfrad ist vorzugsweise ein Rad des Zugfahrzeugs, das im Zeitabschnitt unter Verwendung der Dauerverzögerungseinrichtung und/oder einer Betriebsbremse des Zugfahrzeugs gebremst wird. Das Prüfrad und das Vergleichsrad sind vorzugsweise voneinander verschiedenen Achsen des Zugfahrzeugs zugeordnet. Besonders bevorzugt ist das Prüfrad ein Rad einer Hinterachse des Zufahrzeugs und das Vergleichsrad ein Rad einer Vorderachse des Zugfahrzeugs. Ferner umfasst das Verfahren ein Erfassen einer in dem Zeitabschnitt zum Einwirken auf das Prüfrad bereitgestellten Prüfstellgröße. Die Prüfstellgröße ist vorzugsweise eine Stellgröße eines Bremsaktuators, besonders bevorzugt der Dauerverzögerungseinrichtung. Beispielsweise kann die Prüfstellgröße ein Bremsdruck oder eine elektrische Kenngröße einer elektrodynamischen Dauerverzögerungseinrichtung sein. Das Ermitteln des gegenwärtigen Reibschlussbeiwerts umfasst bevorzugt ein Ermitteln eines Bremsschlupfs des Prüfrads unter Verwendung der Prüfdrehzahl und der Vergleichsdrehzahl.

In einer Variante erlauben ein Bremsschlupf des Prüfrads, der aus einem Vergleich der Prüfdrehzahl des Prüfrads und der Vergleichsdrehzahl des Vergleichsrads ermittelt wird, und die zum Bereitstellen des Bremsschlupfs an diesem Prüfrad bereitgestellte Prüfstellgröße ein zumindest näherungsweises Ermitteln des gegenwärtigen Reibschlussbeiwerts zwischen den Rädern des Fahrzeugs und einer befahrenen Fahrbahn. Wird beispielsweise das Prüfrad im Fall einer schneeglatten Fahrbahn und im Fall einer trockenen sauberen Fahrbahn durch Bereitstellen der gleichen Prüfstellgröße gebremst, dann wird sich im Fall der schneeglatten Fahrbahn ein höherer Bremsschlupf am Prüfrad einstellen als im Fall der trockenen, sauberen Fahrbahn. Unter Verwendung des Bremsschlupfs und der ausgesteuerten Prüfstellgröße kann der gegenwärtige Reibschlussbeiwert so zumindest qualitativ ermittelt werden. Insbesondere kann das Ermitteln des gegenwärtigen Reibschlussbeiwerts ferner einen Vergleich mit zumindest einem Referenzwert und/oder einer Referenzkennlinie umfassen. Beispielsweise kann ein Wert des gegegnwärtigen Reibschlussbeiwerts für die ermittelte Kombination aus Bremschlupf und Prüfstellgröße aus einer vorgespeicherten Referenzkennlinie abgelesene werden. Eine solche Referenzkennlinie kann beispielsweise durch Fahrversuche, die auch im Rahmen der Fahrzeugentwicklung durchgeführt werden können, ermittelt und in einer Steuereinheit des Fahrzeugs vorgespeichert sein. Ferner können auch weitere Charakteristika, wie beispielsweise ein Gesamtgewicht des Fahrzeugs und oder eine Lastverteilung am Fahrzeugzug beim Ermitteln des gegenwärtigen Reibschlussbeiwerts berücksichtigt werden. Beispielsweise kann der gegenwärtige Reibschlussbeiwert für eine bestimmte Kombination aus Bremsschlupf, Prüfstellgröße und Gesamtgewicht des Zugfahrzeugs aus einer zugehörigen vorgespeicherten Kennlinie ermittelt werden.

Vorzugsweise weist das Verfahren ferner auf: Ermitteln eines Gefälles einer vom Fahrzeugzug befahrenen Fahrbahn; und Limitieren der zulässigen Dauerverzögerungsleistung der Dauerverzögerungseinrichtung zusätzlich basierend auf dem ermittelten Gefälle. Die Gefahr eines Einknickens des Fahrzeugs ist bei großem Gefälle erhöht, da in diesem Fall eine Hangabtriebskraft auf das Zugfahrzeug und das Anhängerfahrzeug wirkt. Diese Hangabtriebskraft kann insbesondere beim asymmetrischen Verzögern des Fahrzeugzugs zu Instabilitäten führen, weil beispielsweise das Anhängerfahrzeug auf ein durch die Dauerverzögerungseinrichtung stärker verzögertes Zugfahrzeug aufschiebt. Wenn die maximal zulässige Dauerverzögerungsleistung zusätzlich basierend auf dem Gefälle ermittelt wird, kann diesem Umstand Rechnung getragen werden und die Sicherheit ist erhöht. Vorzugsweise ist die Limitierung umso ausgeprägter, je größer das Gefälle ist. Das zusätzliche Limitieren erfolgt vorzugsweise durch Addieren einer auf dem Gefälle basierenden Limitierung zu einer auf anderen Einflussfaktoren (Masseverhältnis, Kurvenkrümmung, Kupplungslänge, Knickwinkel, Reibschlussbeiwert) basierenden Limitierung. Es kann aber auch ein komplexer Zusammenhang der verschiedenen Einflussfaktoren auf die Limitierung beziehungsweise deren Maß bestehen. Das Ermitteln des Gefälles erfolgt vorzugsweise unter Verwendung einer Trajektorie des Fahrzeugzugs, unter Verwendung von Routeninformationen und/oder unter Verwendung eines Neigungssensors des Fahrzeugzugs.

Gemäß einer bevorzugten Ausführungsform weist das Verfahren ferner auf: Bereitstellen einer Kompensationsverzögerungsleistung an einer oder mehreren Achsen des Fahrzeugzugs, die von der Dauerverzögerungseinrichtung unabhängig sind, um eine durch das Limitieren der zulässigen Dauerverzögerungsleistung der Dauerverzögerungseinrichtung auftretende Fehlverzögerungsleistung zumindest teilweise zu kompensieren. Zum Verzögern des Fahrzeugs auf eine gewünschte Geschwindigkeit beziehungsweise zum Halten des Fahrzeugs bei einer bestimmten Geschwindigkeit, muss abhängig von der kinetischen Energie und auf das Fahrzeug wirkenden Kräften eine definierte Verzögerungsleistung bereitgestellt werden. So muss beispielsweise eine Verzögerungsleistung von etwa 400 kW bereitgestellt werden, um einen Fahrzeugzug mit einer Gesamtmasse von 40 Tonnen bei einem Gefälle von 10% auf einer konstanten Geschwindigkeit von 36 km/h zu halten. Wenn jedoch die maximal zulässige Dauerverzögerungsleistung auf einen Wert von 300 kW limitiert ist, dann liegt eine Fehlverzögerungsleistung von 100 kW vor. Wenn das Fahrzeug dennoch beim Befahren des Gefälles bei der konstanten Geschwindigkeit gehalten werden soll, muss eine Kompensationsverzögerungsleistung bereitgestellt werden. Die Kompensationsverzögerungsleistung wird vorzugsweise von einer oder mehreren Betriebsbremsen des Fahrzeugzugs bereitgestellt. So kann eine geforderte Verzögerung auch dann erreicht werden, wenn die maximal zulässige Dauerverzögerungsleistung nicht ausreicht, um diese zu gewährleisten. Eine Achse ist von der Dauerverzögerungseinrichtung unabhängig, wenn deren Räder nicht von der Dauerverzögerungseinrichtung gebremst werden bzw. bremsbar sind. Ist beispielsweise eine Dauerverzögerungseinrichtung nur an einer Hinterachse eines Nutzfahrzeugs vorgesehen, dann ist eine Vorderachse des Nutzfahrzeugs von der Dauerverzögerungseinrichtung unabhängig. Die von der Dauerverzögerungseinrichtung unabhängige Achse kann alternativ oder ergänzend auch eine Achse eines Anhängerfahrzeugs sein, wenn die Dauerverzögerungseinrichtung an einer Achse eines Zugfahrzeugs wirkt. Das Bereitstellen der Kompensationsverzögerungsleistung an einer von der Dauerverzögerungseinrichtung unabhängigen Achse ist bevorzugt, da ein Bremsen oder Verzögern an der Achse der Dauerverzögerungseinrichtung dem Effekt der Limitierung entgegenwirken würde. Vorzugsweise wird die Kompensationsverzögerungsleistung zumindest teilweise an dem Anhängerfahrzeug bereitgestellt. Ein Einknicken des Fahrzeugzugs kann so besonders effektiv verhindert werden.

Bevorzugt umfasst das Verfahren ferner: Durchführen einer Streckbremsung des Fahrzeugzugs durch eine Anhängerverzögerungseinrichtung des Anhängerfahrzeugs, falls eine geforderte Dauerverzögerungsleistung für den Fahrzeugzug größer ist als die maximal zulässige Dauerverzögerungsleistung. Eine Streckbremsung ist eine Bremsung des Fahrzeugzugs, bei der das Anhängerfahrzeug stärker verzögert wird als das Zugfahrzeug. Eine Streckbremsung wirkt einem Einknicken des Fahrzeugzugs entgegen und kann den Fahrzeugzug stabilisieren. Die Anhängerverzögerungseinrichtung umfasst vorzugsweise Betriebsbremsen des Anhängerfahrzeugs. Die Anhängerverzögerungseinrichtung ist dazu ausgebildet, eine Verzögerung des Anhängerfahrzeugs zu bewirken. Die Streckbremsung wird durchgeführt, wenn die maximale zulässige Dauerverzögerungsleistung geringer ist als die geforderte Verzögerungsleistung, also dann, wenn die Dauerbremseinrichtung aufgrund der Limitierung nicht mehr ausreicht, um die geforderte Verzögerungsleistung bereitzustellen. Ein weiteres Bremsen des Zugfahrzeugs könnte in diesem Fall ein Einknicken des Fahrzeugzugs bewirken, was durch das Durchführen der Streckbremsung verhindert werden kann. Die geforderte Dauerverzögerungsleistung ist eine von einem menschlichen Fahrer und/oder einer Steuereinheit angeforderte Dauerverzögerungsleistung.

Vorzugsweise weist das Verfahren ferner auf: Ausgeben eines Warnsignals, falls die maximal zulässige Dauerverzögerungsleistung geringer ist, als eine technisch mögliche Dauerverzögerungsleistung der Dauerverzögerungseinrichtung. Im Falle einer tatsächlichen Limitierung der Dauerverzögerungsleistung wird also das Warnsignal ausgegeben. So kann ein Fahrer des Fahrzeugs darüber informiert werden, dass ein zusätzlicher Einsatz weiterer Verzögerungseinrichtungen, wie insbesondere von Betriebsbremsen des Fahrzeugzugs, nötig sein kann. Wenn anknüpfend an das vorstehend beschriebene Beispiel die Dauerverzögerungseinrichtung technisch eine Dauerverzögerungsleistung von 700 kW bereitstellen kann, die maximal zulässige Dauerverzögerungsleistung aber auf einen geringeren Wert von nur 400 kW limitiert wird, dann wird gemäß der bevorzugten Weiterbildung des Verfahrens das Warnsignal ausgegeben.

In einem zweiten Aspekt löst die Erfindung die eingangs genannte Aufgabe mit einem Fahrerassistenzsystem für ein Nutzfahrzeug, das dazu ausgebildet ist, das Verfahren gemäß dem ersten Aspekt der Erfindung auszuführen. Das Nutzfahrzeug ist vorzugsweise ein Fahrzeugzug. Es soll verstanden werden, dass das Fahrerassistenzsystem vollständig in einem Zugfahrzeug angeordnet sein kann, wobei das Fahrerassistenzsystem das Verfahren gemäß dem ersten Aspekt der Erfindung nur dann ausführt, wenn ein Anhängerfahrzeug an das Zugfahrzeug angehängt ist.

In einem dritten Aspekt löst die Erfindung die eingangs genannte Aufgabe mittels eines Fahrerassistenzsystems für einen Fahrzeugzug mit einem Zugfahrzeug und zumindest einem Anhängerfahrzeug, wobei der Fahrzeugzug eine Dauerverzögerungseinrichtung aufweist, das Fahrerassistenzsystem aufweisend eine Steuereinheit, die zum Empfangen von Signalen mit zumindest einem Netzwerk des Fahrzeugzugs verbindbar ist, und eine Schnittstelle zu einer Dauerverzögerungseinrichtung des Zugfahrzeugs, wobei die Steuereinheit dazu ausgebildet ist, Signale zu Empfangen und basierend auf den Signalen eine Anhängermasse des Anhängerfahrzeugs in der gegenwärtigen Fahrzeugkonfiguration des Fahrzeugzugs und eine Zugfahrzeugmasse des Zugfahrzeugs in der gegenwärtigen Fahrzeugkonfiguration zu ermitteln; wobei die Steuereinheit ferner dazu ausgebildet ist, basierend auf der Anhängermasse und der Zugfahrzeugmasse ein Masseverhältnis der gegenwärtigen Fahrzeugkonfiguration zu ermitteln, eine zulässige Dauerverzögerungsleistung der Dauerverzögerungseinrichtung in Abhängigkeit des Masseverhältnisses zu limitieren, und ein die limitierte zulässige Dauerverzögerungsleistung (bzw. ein die maximal zulässige Dauerverzögerungsleistung) repräsentierendes Signal an der Schnittstelle bereitzustellen.

In einem vierten Aspekt wird die eingangs genannte Aufgabe gelöst mit einem Nutzfahrzeug, aufweisend eine Dauerverzögerungseinrichtung und ein Fahrerassistenzsystem gemäß dem zweiten Aspekt der Erfindung und/oder ein Fahrerassistenzsystem gemäß dem dritten Aspekt der Erfindung. Vorzugsweise ist das Nutzfahrzeug ein Fahrzeugzug. Es kann aber auch vorgesehen sein, dass das Nutzfahrzeug ein Zugfahrzeug ist. Besonders bevorzugt ist das Fahrerassistenz dann dazu eingerichtet, das Verfahren gemäß dem ersten Aspekt der Erfindung nur dann auszuführen, wenn ein Anhängerfahrzeug an das Nutzfahrzeug angehängt ist.

Gemäß einem fünften Aspekt löst die Erfindung die eingangs genannte Aufgabe mit einem Computerprogrammprodukt mit Programmcode-Mitteln, die auf einem computerlesbaren Datenträger gespeichert sind, um das Verfahren nach dem ersten Aspekt der Erfindung auszuführen, wenn das Programmprodukt auf einer Recheneinheit eines Nutzfahrzeugs ausgeführt wird, das eine Liftachse aufweist. Das Nutzfahrzeug ist vorzugsweise ein Nutzfahrzeug gemäß dem vierten Aspekt der Erfindung.

Es soll verstanden werden, dass das Fahrerassistenzsystem gemäß dem zweiten und/oder dritten Aspekt der Erfindung, das Nutzfahrzeug gemäß dem vierten Aspekt der Erfindung und das Computerprogrammprodukt gemäß dem fünften Aspekt der Erfindung gleiche und ähnliche Unteraspekte aufweisen können, wie sie insbesondere in den abhängigen Ansprüchen zum Verfahren gemäß dem ersten Aspekt der Erfindung niedergelegt sind.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne dass dadurch der durch die Patentansprüche definierte Schutzbereich verlassen wird.
Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: eine schematische Darstellung eines Fahrzeugzugs in einer Draufsicht,
- Fig. 2: den Fahrzeugzug gemäß Fig. 1 in einer Seitenansicht, und in
- Fig. 3: ein Verfahren zum Steuern des Fahrzeugzugs.

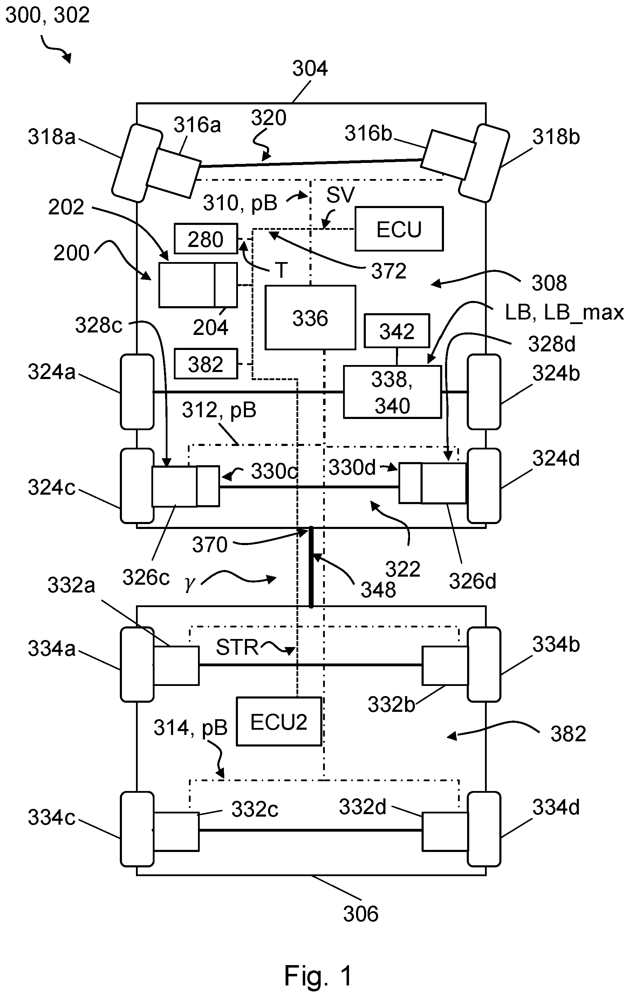

Figur 1 illustriert ein Fahrzeug 300 das hier ein Fahrzeugzug 302 mit einem Zugfahrzeug 304 und ein Anhängerfahrzeug 306 ist. Das Fahrzeug 300 umfasst ein Bremssystem 308 mit einem Vorderachsbremskreis 310, einem Hinterachsbremskreis 312 und einem Anhängerbremskreis 314. Der Vorderachsbremskreis 310 umfasst zwei Vorderachsbremsaktuatoren 316a, 316b, die Vorderrädern 318a, 318b einer Vorderachse 320 des Zugfahrzeugs 304 zugeordnet sind. An Hinterrädern 324a, 324b, 324c, 324d einer Hinterachsgruppe 322 des Zugfahrzeugs 304 sind Hinterachsbremsaktuatoren 326c, 326d angeordnet, die dem Hinterachsbremskreis 312 zugeordnet und zum Aussteuern eines Bremsschlupfes an den Hinterrädern 324 ausgebildet sind. Aus Darstellungsgründen sind hier nur Hinterachsbremsaktuatoren 324c, 326d an zwei der Hinterräder 324c, 324d dargestellt. Es soll jedoch verstanden werden, dass der Hinterachsbremskreis 312 für jedes der Hinterräder 324 einen Hinterachsbremsaktuator 326 aufweisen kann. Die Hinterachsbremsaktuatoren 326 sind mehrfach wirkende Bremsaktuatoren, die neben einem Betriebsbremsteil 328c, 328d zusätzlich je einen Federspeicherteil 330c, 330d aufweisen, der als Parkbremse dient. Eine in dem jeweiligen Federspeicherteil 330c, 330d angeordnete Feder spannt den Hinterachsbremsaktuator 326 zu, falls kein pneumatischer Lösedruck in dem Federspeicherteil 330c, 330d bereitgestellt wird. Um das Fahrzeug 300 bewegen zu können bzw. die Parkbremse zu lösen, wird der Lösedruck bereitgestellt, wodurch die Feder gespannt und der jeweilige Hinterachsbremsaktuator 326 freigegeben wird.

Zum Bremsen des Anhängerfahrzeugs 306 weist der Anhängerbremskreis 314 Anhängerbremsaktuatoren 332a, 332b, 332c, 332d auf, die Anhängerrädern 334a, 334b, 334c, 334d des Anhängerfahrzeugs 306 zugeordnet sind. Die Vorderachsbremsaktuatoren 316, Hinterachsbremsaktuatoren 326 und Anhängerbremsaktuatoren 332 sind pneumatische Bremsaktuatoren 316, 326, 332, die im vorliegenden Ausführungsbeispiel vereinfacht von einem gemeinsamen Bremsmodulator 336 mit Bremsdruck pB versorgt werden. Es soll jedoch verstanden werden, dass jeder der Bremskreise 310, 312 oder 314 einen oder mehrere eigene Bremsmodulatoren aufweisen kann und/oder dass die Bremsaktuatoren 316, 326, 332 eines Bremskreises 310, 312, 314 oder verschiedener Bremskreise 310, 312, 314 auch mit voneinander verschiedenen Bremsdrücken pB versorgt werden können. So kann beispielsweise ein Bremsdruck pB am Vorderachsbremsaktuator 316a des linken Vorderrades 318a von einem Bremsdruck pB am Vorderachsbremsaktuator 316b des rechten Vorderrades 318b verschieden sein.

Die Vorderachsbremsaktuatoren 316, Hinterachsbremsaktuatoren 326 und die Anhängerbremsaktuatoren 332 sind hier als Reibbremsen ausgebildete Betriebsbremsen des Fahrzeugs 300, die durch Reibung zwischen Bremsscheiben (in den Figuren nicht dargestellt) und korrespondierenden Bremsbelägen (in den Figuren ebenfalls nicht dargestellt) kinetische Energie des Fahrzeugs 300 in thermische Energie umwandeln, um das Fahrzeug 300 zu verzögern. Wenn das Fahrzeug 300 ausschließlich mittels der Bremsaktuatoren 316, 326, 332 verzögert wird, dann führt die Reibwirkung zu einem hohen Verschleiß der wiederrum hohe Betriebskosten des Fahrzeugs bewirkt. Ferner können sich die Vorderachsbremsaktuatoren 316, Hinterachsbremsaktuatoren 326 und/oder die Anhängerbremsaktuatoren 332 beim Befahren einer langen und/oder steilen Gefällestrecke sehr stark erhitzen, wodurch deren Bremsfunktion unter Umständen eingeschränkt sein kann. Aus diesem Grund umfasst das Fahrzeug 300 ferner eine Dauerverzögerungseinrichtung 338, die im gezeigten Ausführungsbeispiel ein hydrodynamisch wirkender Retarder 340 ist. Der Retarder 340 ist an der Hinterachsgruppe 322 angeordnet und dazu ausgebildet, die Hinterräder 324c, 324d des Zugfahrzeugs 304 zu verzögern bzw. daran einen Bremsschlupf auszusteuern. Aufgrund ihres hydrodynamischen Wirkprinzips ist die Dauerverzögerungseinrichtung 338 dazu ausgebildet, nahezu verschleißfrei eine Dauerverzögerungsleistung LB für das Fahrzeug 300 bereitzustellen. Durch die Dauerverzögerungsleistung LB kann das Fahrzeug 300 beispielsweise beim Befahren einer langen Gefällestrecke kontinuierlich gebremst werden, um das Fahrzeug 300 so in einem unkritischen Geschwindigkeitsbereich zu halten und die Betriebsbremsen zu schonen. Zum Aktivieren und Deaktivieren der Dauerverzögerungseinrichtung 338 ist ein Betätigungshebel 342 vorgesehen, der von einem Fahrer des Fahrzeugs 300 betätigt werden kann. Mittels dieses Betätigungshebels 342 kann die Dauerverzögerungseinrichtung 338 dosiert werden. Es kann aber auch vorgesehen sein, dass die Dauerverzögerungseinrichtung 338 rein elektronisch aktiviert, deaktiviert und/oder dosiert wird, beispielsweise durch eine Hauptsteuereinheit ECU des Zugfahrzeugs 304.

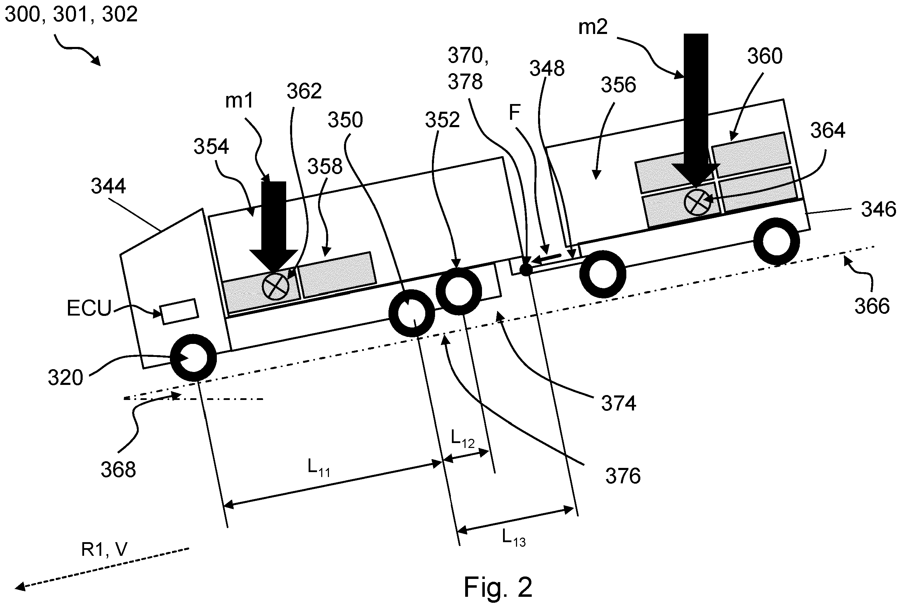

Fig. 2 zeigt den Fahrzeugzug 302 in einer Seitenansicht, wobei das Zugfahrzeug 304 ein Lastkraftwagen 344 ist. Das Anhängerfahrzeug 306 ist ein Deichselanhänger 346, der über eine Deichsel 348 mit dem Zugfahrzeug 304 verbunden ist. In der Seitenansicht gemäß Fig. 2 ist auch zu erkennen, dass die Hinterachsgruppe 322 zusätzlich zu einer Hinterachse 350 eine liftbare bzw. anhebbare Zusatzachse 352 bzw. Liftachse 352 aufweist, die angehoben ist. Durch Absenken der Liftachse 352 kann eine Last des Zugfahrzeugs 304 auf eine zusätzliche Achse verteilt werden, sodass sich die Achslast je Achse 320, 350, 352 reduziert. Die Liftachse 352 ist hier eine Nachlaufachse. Ein fahrdynamisch wirksamer Radstand des Zugfahrzeugs 304 ändert sich beim Absenken der Liftachse 352. Bei angehobener Liftachse 352 entspricht der fahrdynamisch wirksame Radstand des Zugfahrzeugs 304 einem Achsabstand L11 zwischen der Vorderachse 320 und der Hinterachse 350, der in einer Fahrzeuglängsrichtung R1 gemessen wird. Bei abgesenkter Liftachse 352 kommt zu diesem Achsabstand L11 ein halber Liftachsenabstand L12 hinzu, sodass der fahrdynamisch wirksame Radstand des Zugfahrzeugs 304 bei abgesenkter Liftachse 352 hier der Summe L11+L12/2 entspricht. Der Liftachsenabstand beschreibt den in Fahrzeuglängsrichtung R1 ermittelten Abstand zwischen der Hinterachse 350 und der Liftachse 352.

Die Belastung des Fahrzeugs 300 resultiert einerseits aus dem Eigengewicht des Zugfahrzeugs 304 und des Anhängerfahrzeugs 306 und andererseits aus dessen Beladung. Das Zugfahrzeug 304 hat eine erste Ladefläche 354, auf der eine erste Ladung 358 angeordnet ist. Eine zweite Ladung 360 ist auf einer zweiten Ladefläche 356 des Deichselanhängers 346 angeordnet. Fig. 2 illustriert durch die Anzahl der die Ladungen 358, 360 repräsentierenden Blöcke, dass das Anhängerfahrzeug 306 erheblich schwerer beladen ist als das Zugfahrzeug 304. Eine Zugfahrzeugmasse m1 des Zugfahrzeugs 304, die im Wesentlichen von einer Leermasse des Zugfahrzeugs 304 und der Masse der ersten Ladung 358 bestimmt wird, ist als in einem Zugfahrzeugschwerpunkt 362 des Zugfahrzeugs 304 angreifender Pfeil illustriert. Analog ist eine Anhängermasse m2 des Anhängerfahrzeugs 306, die im Wesentlichen von einer Leermasse des Anhängerfahrzeugs 306 und der Masse der zweiten Ladung 360 bestimmt wird, als in einem Anhängerfahrzeugschwerpunkt 364 des Anhängerfahrzeugs 306 angreifender Pfeil illustriert. Die ungleiche Lastverteilung zwischen Zugfahrzeug 304 und Anhängerfahrzeug 306 wird durch die Länge der die Massen m1, m2 illustrierenden Pfeile verdeutlicht.

In Fig. 2 fährt der Fahrzeugzug 302 auf einer Fahrbahn 366, die ein Gefälle 368 aufweist. Aufgrund des Gefälles 368 wirkt ein Teil der aus den Massen m1, m2 resultierenden Gewichtskraft in Fahrzeuglängsrichtung R1. Diese auch als Hangabtriebskraft bezeichnete Kraftkomponente bewirkt eine Beschleunigung des Fahrzeugs 300 in Fahrzeuglängsrichtung R1, wenn diese nicht durch eine entgegen gerichtete Kraft ausgeglichen wird. Zum kontinuierlichen Ausgleichen der Hangabtrieskraft stellt die Dauerverzögerungseinrichtung 338 eine (oder gegebenenfalls auch darüber hinaus gehende) Dauerverzögerungsleistung bereit.

Das Missverhältnis der Massen m1, m2 ist im Hinblick auf eine Fahrstabilität des Fahrzeugs 300 ungünstig. So ist die Anhängermasse m2 deutlich größer als die Zugfahrzeugmasse m1, was bei identischer Geschwindigkeit V des Zugfahrzeugs 304 und des Anhängerfahrzeugs 306 dazu führt, dass das Anhängerfahrzeug 306 eine erheblich größere kinetische Energie hat als das Zugfahrzeug 304. Zum Verzögern des Anhängerfahrzeugs 306 über einen bestimmten Zeitraum hinweg, muss daher in diesem Zeitraum auch eine erheblich größere Verzögerungsleistung an dem Anhängerfahrzeug 306 bereitgestellt werden als an dem Zugfahrzeug 304. Wird hingegen für beide Fahrzeugteile 304, 306 dieselbe Verzögerungsleistung bereitgestellt, wird das Anhängerfahrzeug 306 weniger stark abgebremst und schiebt auf das Zugfahrzeug 304 auf. Dabei überträgt das Anhängerfahrzeug 306 mittels der Deichsel 348 eine Kupplungskraft F auf eine Kupplung 370 des Zugfahrzeugs 304. Diese Kupplungskraft F kann das Zugfahrzeug 304 destabilisieren und unter Umständen zu kritischen Fahrzuständen führen. Da die Dauerverzögerungseinrichtung 338 im vorliegenden Ausführungsbeispiel nur an der Hinterachse 350 der Hinterachsgruppe 322 des Zugfahrzeugs 304 wirkt, ist das Risiko für Instabilitäten des Fahrzeugs 300 bei ungünstiger Lastverteilung unter Umständen stark erhöht, insbesondere wenn das Fahrzeug 300 allein mittels der Dauerverzögerungseinrichtung 338 gebremst wird. Das heißt das Fahrzeug 300 kann beim Befahren der Fahrbahn 366 mit dem Gefälle 368 instabil werden, wenn die Dauerverzögerungseinrichtung 338 bei ungünstiger Lastverteilung bzw. ungünstigem Verhältnis zwischen Zugfahrzeugmasse m1 und Anhängermasse m2 eine zu große Dauerverzögerungsleistung **LB** bereitstellt.

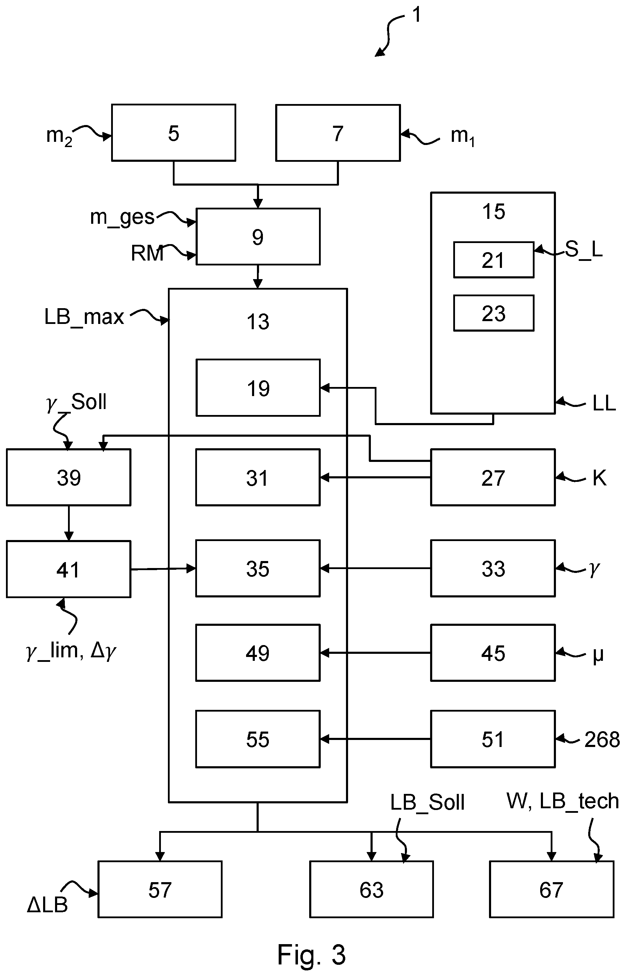

Um solche Instabilitäten des Fahrzeugs 300 zu verhindern, weist das Fahrzeug 300 eine Fahrerassistenzsystem 200 auf. Das Fahrerassistenzsystem 200 umfasst eine Steuereinheit 202 und eine Schnittstelle 204. Die Schnittstelle 204 ist mit einem Fahrzeugnetzwerk 372, das hier ein ISO 11992 CAN-Fahrzeugbus ist, mit weiteren Baugruppen und/oder Einheiten des Zugfahrzeugs 304 und des Anhängerfahrzeugs 306 verbunden. So ist die Steuereinheit 202 des Fahrerassistenzsystems 200 im vorliegenden Ausführungsbeispiel über das Fahrzeugnetzwerk 372 mit der Dauerverzögerungseinrichtung 338 verbunden, um diese zu steuern. Ferner ist die Steuereinheit 202 über das Fahrzeugnetzwerk 372 mit der Hauptsteuereinheit ECU des Zugfahrzeugs und einer Anhängersteuereinheit ECU2 des Anhängerfahrzeugs 306 verbunden. Das Fahrerassistenzsystem 200 ist dazu ausgebildet, ein Verfahren 1 zum Steuern des Fahrzeugzugs 302 auszuführen, das nachfolgend mit Bezug zu Fig. 3 erläutert wird. Im vorliegenden Ausführungsbeispiel kann mittels des Verfahrens 1 ein Risiko für Instabilitäten des Fahrzeugs 300 reduziert werden.

In einem ersten Schritt des Verfahrens 1 erfolgt ein Ermitteln 5 der Anhängermasse m2. Im gezeigten Ausführungsbeispiel empfängt die Steuereinheit 202 des Fahrerassistenzsystems 200 hierzu Anhängersignale STR, die von der Anhängersteuereinheit ECU2 auf dem Fahrzeugnetzwerk 372 bereitgestellt werden. Unter Verwendung der Anhängersignale STR ermittelt die Steuereinheit 202 dann die Anhängermasse m2. Hier wertet die Steuereinheit 202 von den Anhängersignalen STR umfasste Achslastsignale aus und ermittelt daraus rechnerisch die Anhängermasse m2. Es kann aber beispielsweise in anderen Ausgestaltungen auch vorgesehen sein, dass die Anhängersteuereinheit ECU2 oder die Hauptsteuereinheit ECU des Zugfahrzeugs 304 Signale auf dem Fahrzeugnetzwerk 372 bereitstellen, die die Anhängermasse m2 unmittelbar repräsentieren.

In einem zweiten Schritt des Verfahrens 1, der hier parallel zum Ermitteln 5 der Anhängermasse m2 durchgeführt wird, erfolgt ein Ermitteln 7 der Zugfahrzeugmasse m1. Auch das Ermitteln 7 der Zugfahrzeugmasse m1 wird in dem gezeigten Ausführungsbeispiel von der Steuereinheit 202 des Fahrerassistenzsystems 200 durchgeführt. Hierzu empfängt die Steuereinheit 202 Fahrzeugsignale SV, die auf dem Fahrzeugnetzwerk 372 bereitgestellt werden. Die Fahrzeugsignale SV umfassen hier einen Fahrzeugtyp, aus dem die Steuereinheit 202 eine Leermasse des Zugfahrzeugs 304 ermittelt. Ferner umfassen die Fahrzeugsignale SV geometrische Charakteristika des Zugfahrzeugs 304, wie den Achsabstand L11, den Liftachsenabstand L12 und einen Liftstatus S_L. Der Liftstatus S_L kann zumindest eine angehobene Liftachse 352 und eine abgesenkte Liftachse 352 repräsentieren, sodass die Steuereinheit 202 unter Verwendung des Liftstatus S_L ermitteln kann, ob die Liftachse 352 angehoben oder abgesenkt ist. Ferner umfassen die Fahrzeugsignale SV hier eine Achslast auf der Hinterachse 350 des Zugfahrzeugs 304 und eine Achslast auf der Vorderachse 320 des Zugfahrzeugs 304. Unter Verwendung der Achslasten auf der Vorderachse 320 und der Hinterachse 350 (die Liftachse 352 ist im Ausführungsbeispiel gemäß Fig. 2 angehoben und trägt keine Last) ermittelt die Steuereinheit 202 die Zugfahrzeugmasse m1. Es kann aber auch vorgesehen sein, dass das Ermitteln 7 der Zugfahrzeugmasse m1 basierend auf Fahrzeugsignalen SV erfolgt, die die Zugfahrzeugmasse m1 unmittelbar repräsentieren. So kann beispielsweise die Hauptsteuereinheit ECU des Zugfahrzeugs 304 dazu ausgebildet sein, die Zugfahrzeugmasse m1 repräsentierende Fahrzeugsignale SV auf dem Fahrzeugnetzwerk 372 bereitzustellen. Es soll jedoch verstanden werden, dass auch andere Einheiten oder Baugruppen des Fahrzeugs 300 dazu ausgebildet sein können, die Zugfahrzeugmasse m1 zu ermitteln und vorzugsweise auf dem Fahrzeugnetzwerk 372 bereitzustellen. So kann beispielsweise auch eine Bremssteuereinheit des Bremssystems 308 die Zugfahrzeugmasse m2 ermitteln.

Die Zugfahrzeugmasse m1 und die Anhängermasse m2 bestimmen maßgeblich eine gegenwärtige Fahrzeugkonfiguration 301 des Fahrzeugs 300. Die gegenwärtige Fahrzeugkonfiguration 301 umfasst neben geometrischen Charakteristika des Fahrzeugs 300 also auch Lastcharakteristika, die ladungsspezifische Aspekte betreffen. Die geometrischen Charakteristika repräsentieren die Geometrie des Fahrzeugs 300. Neben oder anstelle von geometrischen Abmessungen können die geometrischen Charakteristika vorzugsweise auch Mengenangaben (beispielsweise eine Anzahl der Achsen des Fahrzeugs 300) enthalten. Geometrische Charakteristika sind oder umfassen insbesondere die Fahrdynamik des Fahrzeugs 300 definierende Geometriegrößen, wie den Achsabstand L11, den Liftachsenabstand L12, eine Spurbreite des Fahrzeugs, einen Kupplungsabstand L13 zwischen der Hinterachse 350 des Zugfahrzeugs 304 und der Kupplung 370, der in Fahrzeuglängsrichtung R1 gemessen wird, und/oder eine Konstruktionsform bzw. ein Typ des Anhängerfahrzeugs 306 (beispielsweise Deichselanhänger 346 oder Zentralachsanhänger).

Die Lastcharakteristika repräsentieren auf das Fahrzeug 300 wirkende Lasten, die aus dem Eigengewicht des Fahrzeugs 300 (inkl. Betriebsstoffe) und aus der Ladung 358, 360 des Fahrzeugs 300 resultieren können. So ist eine gegenwärtige Fahrzeugkonfiguration eines unbeladenen Fahrzeugs 300 verschieden von der gegenwärtigen Fahrzeugkonfiguration des in Fig. 2 gezeigten Fahrzeugs 300 im beladenen Zustand.

Das Ermitteln 5 der Anhängermasse m2 und das Ermitteln 7 der Zugfahrzeugmasse m1 erfolgt hier simultan, kann aber in Varianten des Verfahrens 1 auch zeitlich zueinander versetzt oder teilweise simultan erfolgen. So kann das Ermitteln 7 der Zugfahrzeugmasse m1 auch vor dem Ermitteln 5 der Anhängermasse m2 durchgeführt werden. Vorzugsweise werden das Ermitteln 5 der Anhängermasse m2 und das Ermitteln 7 der Zugfahrzeugmasse m1 bei einer Fahrzeugaktivierung des Fahrzeugs 300 durchgeführt, die auch als Inbetriebnahme bezeichnet werden kann. Die Inbetriebnahme erfolgt in der Regel durch Betätigen einer Zündung des Fahrzeugs 300 oder durch Betätigen eines Fahrschalters. Ein Ermitteln 5 und/oder ein Ermitteln 7 das bei Fahrzeugaktivierung durchgeführt wird, wird durch die Fahrzeugaktivierung ausgelöst, muss aber nicht unmittelbar zeitgleich erfolgen und auch nicht gemeinsam mit der Fahrzeugaktivierung abgeschlossen sein.

In einem an das Ermitteln 5 der Anhängermasse m2 und das Ermitteln 7 der Zugfahrzeugmasse m1 anschließenden Schritt des Verfahrens 1, wird unter Verwendung dieser Massen m1, m2 eine Masseverhältnis RM der gegenwärtigen Fahrzeugkonfiguration 301 ermittelt (Ermitteln 9 in Fig. 3). Das Masseverhältnis RM setzt die Zugfahrzeugmasse m1 und die Anhängermasse m2 ins Verhältnis, wobei das Masseverhältnis RM im vorliegenden Ausführungsbeispiel der Quotient aus der Anhängermasse m2 und einer Fahrzeuggesamtmasse m_ges ist, die der Summe aus der Zugfahrzeugmasse m1 und der Anhängermasse m2 entspricht (RM = m2/m_ges = m2/(m1+m2)). Das Masseverhältnis RM kann im einfachsten Fall aber auch der Quotient aus Zugfahrzeugmasse m1 und Anhängermasse m2 (RM = m2/m1), ein reziproker Wert der vorgenannten Definitionen oder gänzlich anders definiert sein.

Die Kupplungskraft F, die im Rahmen einer durch die Dauerverzögerungseinrichtung 338 des Zugfahrzeugs 304 bewirkten Dauerbremsung von dem ungebremsten Anhängerfahrzeug 306 auf die Kupplung 370 des Zugfahrzeugs 304 abgestützt wird, ist abhängig von der Dauerverzögerungsleistung LB der Dauerverzögerungseinrichtung 338 und direkt proportional zum Masseverhältnis RM. Je größer also das Masseverhältnis RM ist, desto größer ist auch die auf die Kupplung 370 übertragene Kupplungskraft F, wenn nur die Dauerverzögerungseinrichtung 338 des Zugfahrzeugs 304 eine Verzögerung des Fahrzeugs 300 bewirkt. Für einen Fahrzeugzug, der einen regulären Lastkraftwagen 344 mit einer Zugfahrzeugleermasse von 12 t und einer maximalen Zugfahrzeugmasse von 25 t sowie einen regulären Deichselanhänger 346 mit einer Anhängerleermasse von 6 t und einer maximalen Anhängermasse von 18 t aufweist, ergibt sich ein Bereich des Masseverhältnisses RM von 0,2 bis 0,6. Abhängig von der Beladung des Fahrzeugs 300 unterliegt die Kupplungskraft F daher einer großen Schwankungsbreite. Ein Übersetzungsverhältnis der von der Dauerverzögerungseinrichtung 338 des Zugfahrzeuges 304 bereitgestellten Bremskraft in die Kupplungskraft F weist in Abhängigkeit der Beladungsunterschiede zwischen dem Zugfahrzeug 304 und dem Anhängerfahrzeug 306 in diesem Beispiel eine maximale Spreizung von 300% auf. Es soll jedoch verstanden werden, dass für andere Fahrzeuge 300 auch andere Werte des Masseverhältnisses **RM** auftreten können.

Da zu große Kupplungskräfte F ein Risiko für Instabilitäten des Fahrzeugs 300 erhöhen, kann dieses Risiko durch Beschränken der Kupplungskraft F reduziert werden. Hierzu wird im Verfahren 1 anschließend an das Ermitteln 9 des Masseverhältnisses **RM** ein Limitieren 13 einer maximal zulässige Dauerverzögerungsleistung LB_max durchgeführt. Die Dauerverzögerungsleistung **LB** ist die in der gegenwärtigen Situation von der Dauerverzögerungseinrichtung 338 bereitgestellte Dauerverzögerungsleistung während die maximal zulässige Dauerverzögerungsleistung LB_max ein Grenzwert ist, den die gegenwärtige Dauerverzögerungsleistung **LB** nicht überschreiten darf. Während die Dauerverzögerungseinrichtung 338 das Fahrzeug 300 verzögert, kann die während des Verzögerns bereitgestellte Dauerverzögerungsleistung **LB** jeden Wert annehmen, der kleiner oder gleich der maximal zulässigen Dauerverzögerungsleistung LB_max ist. Die Dauerverzögerungsleistung **LB** ist direkt proportional zur von der Dauerverzögerungseinrichtung 338 im Rahmen einer Dauerverzögerung bereitgestellten Bremskraft, sodass die bereitgestellte Bremskraft umso kleiner ist, je geringer die Dauerverzögerungsleistung **LB** ist. Durch das Limitieren 13 der maximal zulässigen Dauerverzögerungsleistung LB_max wird so sichergestellt, dass die von der Dauerverzögerungseinrichtung 338 bereitgestellte Bremskraft ein maximales Maß nicht überschreitet. Aufgrund des vorbeschriebenen Zusammenhangs zwischen Bremskraft und Kupplungskraft F wird durch das Limitieren 13 der maximal zulässigen Dauerverzögerungsleistung LB_max auch die beim dauerhaften Verzögern des Zugfahrzeugs 304 mittels der Dauerverzögerungseinrichtung 338 hervorgerufene Kupplungskraft F an der Kupplung 370 des Zugfahrzeugs 304 limitiert. Dieses Limitieren 13 der maximal zulässigen Dauerverzögerungsleistung 338 ist an die gegenwärtige Fahrzeugkonfiguration 301 angepasst, da es basierend auf dem Masseverhältnis **RM** erfolgt. So kann die maximal zulässige Dauerverzögerungsleistung LB_max bei großem Masseverhältnis **RM** beispielsweise stärker limitiert werden als bei kleinem Masseverhältnis RM. Auch bei hecklastig beladenem Fahrzeug 300 können Instabilitäten verhindert werden.

Die maximal zulässige Dauerverzögerungsleistung LB_max muss nicht zwangsweise kleiner sein als eine technisch mögliche Dauerverzögerungsleistung LB_tech. Die technisch mögliche Dauerverzögerungsleistung LB_tech ist eine Dauerverzögerungsleistung, die die Dauerverzögerungseinrichtung 338 aufgrund konstruktiver und weiterer technischer Gegebenheiten maximal bereitstellen kann. So kann die maximal zulässige Dauerverzögerungsleistung LB_max bei einem Masseverhältnis **RM** von 0,2, das im vorliegenden Ausführungsbeispiel einem vollbeladenen Lastkraftwagen 344 und einem leeren Deichselanhänger 348 entspricht, auch gleich der technisch mögliche Dauerverzögerungsleistung LB_tech sein. Bei einem Masseverhältnis **RM** von 0,6, das im vorliegenden Ausführungsbeispiel einem leeren Lastkraftwagen 344 und einem vollbeladenen Deichselanhänger 348 entspricht, kann die maximal zulässige Dauerverzögerungsleistung LB_max hingegen nur ein Bruchteil (z.B. 20%) der technisch möglichen Dauerverzögerungsleistung LB_tech sein. Hier wird die maximal zulässige Dauerverzögerungsleistung LB_max mit steigendem relativen Anteil der Anhängermasse m2 an der Gesamtmasse m_ges des Fahrzeugzugs 302 reduziert. Gemäß der in diesem Ausführungsbeispiel vorliegenden Definition des Masseverhältnisses **RM** (RM=m2/(m1+m2)), steigt der relative Anteil der Anhängermasse m2, wenn das Masseverhältnis **RM** ansteigt. Umso größer also das Masseverhältnis **RM** ist, desto stärker wird vorzugsweise die maximal zulässige Dauerverzögerungsleistung LB_max limitiert.

Ein Hebelarm 374 für die an der Kupplung 370 angreifende Kupplungskraft F auf das Fahrzeug 300, die durch das aufschiebende Anhängerfahrzeug 306 induziert wird, stellt einen weiteren mögliche Instabilitäten des Fahrzeugs 300 beeinflussenden Faktor dar. Der Hebelarm 374 wird wesentlich durch eine Kupplungslänge **LL** und einen Knickwinkel γ zwischen dem Zugfahrzeug 204 und dem Anhängerfahrzeug 306 bestimmt. So kann dieselbe Kupplungskraft F bei einen großen Hebelarm 374, der mit zunehmender Kupplungslänge **LL** steigt, ein höheres Reaktionsmoment auf das Zugfahrzeug 304 bewirken als bei kleinem Hebelarm 374. Das Limitieren der maximal zulässigen Dauerverzögerungsleistung LB_max wird daher im vorliegenden Ausführungsbeispiel zusätzlich basierend auf der Kupplungslänge **LL** durchgeführt (Limitieren 19 in Fig. 3). Es soll jedoch verstanden werden, dass das Limitieren 13 der maximal zulässige Dauerverzögerungsleistung LB_max auch ohne Verwendung der Kupplungslänge **LL** durchgeführt werden kann.

Um die Kupplungslänge LL beim Limitieren 19 berücksichtigen zu können, umfasst das Verfahren 1 ein Ermitteln 15 der Kupplungslänge LL, das vor dem Limitieren 13, 19 durchgeführt wird. Die Kupplungslänge LL ist hier ein in Fahrzeuglängsrichtung R1 ermittelter Abstand der Kupplung 370 von einem Aufstandspunkt der in Fahrtrichtung hintersten Achse des Fahrzeugs 300. Bei angehobener Liftachse 352 entspricht die Kupplungslänge LL daher dem Kupplungsabstand L13 zwischen der Hinterachse 350 und der Kupplung 370 (LL=L13) wohingegen sich die Kupplungslänge LL bei abgesenkter Liftachse 352 auf einen Wert reduziert, der dem Kupplungsabstand L13 abzüglich des Liftachsenabstands L12 entspricht (LL=L13-L12).

Das Ermitteln 15 der Kupplungslänge LL umfasst im vorliegenden Ausführungsbeispiel zunächst ein Ermitteln 21 des Liftstatus S_L, welches hier durch die Steuereinheit 202 des Fahrerassistenzsystems 200 basierend auf den Fahrzeugsignalen SV erfolgt. Des Weiteren umfasst das Ermitteln 15 der Kupplungslänge LL ein Ermitteln 23 einer Position einer Achsgruppenmitte 376 in Fahrzeuglängsrichtung R1 (in Fig. 2 für eine abgesenkte Liftachse 352 angedeutet) unter Verwendung des Liftstatus S_L. Daran anschließend erfolgt im Verfahren 1 ein Ermitteln der Kupplungslänge LL als Abstand zwischen der Achsgruppenmitte 376 und der Kupplung 370 bzw. einem von der Kupplung 370 definierten Kupplungspunkt 378 des Zugfahrzeugs 304. Im vorliegenden Ausführungsbeispiel führt die Steuereinheit 202 des Fahrerassistenzsystems 200 auch das Ermitteln 23 aus.

Herkömmliche Lastkraftwagen 344 weisen neben der Kupplung 370, die zum Ankoppeln von Deichselanhängern 346 vorgesehen ist, noch eine weitere Kupplung (in den Figuren nicht dargestellt) auf, die zum Ankoppeln anderer Anhängertypen, wie insbesondere von Zentralachsanhängern, vorgesehen ist. Eine sogenannte Tiefkupplung für Zentralachsanhänger ist in der Regel näher an der Hinterachse 350 bzw. der Hinterachsgruppe 322 angeordnet, sodass sich die Kupplungslänge LL abhängig vom Anhängertyp ändern kann. Vorzugsweise umfasst das Ermitteln der Kupplungslänge LL daher ein Ermitteln eines Anhängertyps des Anhängerfahrzeugs 306. Vorliegend ist der Anhängertyp des Anhängerfahrzeugs 306 von den Anhängersignalen STR umfasst, sodass die Steuereinheit 202 des Fahrerassistenzsystems basierend auf den Anhängersignalen STR den Anhängertyp ermitteln kann. Da die Anhängersignale STR hier einen Deichselanhänger 346 repräsentieren, kann die Steuereinheit 202 dann eine Position des Kupplungspunkts 378 ermitteln, die hier die Position der Kupplung 370 ist. Die Position der Kupplung 370 kann beispielsweise unter Verwendung der Fahrzeugsignale SV, die hier auch entsprechende geometrische Charakteristika des Zugfahrzeugs 304 umfassen, ermittelt werden. Die Kupplungslänge LL ist so bekannt und kann zum Limitieren 19 der maximal zulässigen Dauerverzögerungsleistung LB_max unter Verwendung der Kupplungslänge LL und des Masseverhältnisses RM verwendet werden.

Im vorliegenden Verfahren 1 wird die maximal zulässige Dauerverzögerungsleistung LB_max ferner basierend auf einer Kurvenkrümmung K der von dem Fahrzeugzug 302 befahrenen Fahrbahn 366 limitiert (Limitieren 31 in Fig. 3). Diesem Limitieren 31 geht ein Ermitteln 27 der Kurvenkrümmung K voraus. Hier ermittelt die Steuereinheit 202 des Fahrerassistenzsystems 200 beim Ermitteln 27 die Kurvenkrümmung K basierend auf einer Trajektorie T, die von einer autonomen Einheit 380 des Fahrzeugs bereitgestellt wird. Es kann aber auch vorgesehen sein, dass die Steuereinheit 202 die Kurvenkrümmung K basierend auf Routeninformationen ermittelt, die von einem Fahrzeugnavigationssystem oder einer anderen Einheit des Fahrzeugs 300 auf dem Fahrzeugnetzwerk 372 bereitgestellt werden. Im Allgemeinen ist ein Risiko für Instabilitäten des Fahrzeugs 300 bei engen Kurven der Fahrbahn 366 bzw. bei großen Kurvenkrümmungen K der Fahrbahn 366 im Vergleich zu sanften Kurven mit kleinen Kurvenkrümmungen K erhöht, da höhere Seitenführungskräfte bereitgestellt werden müssen, um das Fahrzeug entlang der Kurve zu führen. Der Einfluss der Kurvenkrümmung K der Fahrbahn 366 kann daher im Verfahren 1 vorteilhaft berücksichtigt werden, um das Risiko für Instabilitäten des Fahrzeugs 300 weiter zu reduzieren.

Auch große Knickwinkel γ zwischen dem Zugfahrzeug 204 und dem Anhängerfahrzeug 306 erhöhen das Risiko für Instabilitäten des Fahrzeugzugs 302. So ist bei großen Werten des Knickwinkels γ ein Risiko eines Einknickens des Fahrzeugzugs 302 erhöht, insbesondere Weil der Hebelarm 374 für die Kupplungskraft F mit zunehmendem Knickwinkel γ ansteigt. Es ist daher vorteilhaft, die maximal zulässige Dauerverzögerungsleistung LB_max ferner basierend auf dem Knickwinkel γ zu limitieren, wie dies im Verfahren gemäß Fig. 3 durch das Limitieren 35 erfolgt. Dem Limitieren 35 vorausgehend wird der Knickwinkel γ von der Steuereinheit 202 des Fahrerassistenzsystems 200 ermittelt (Ermitteln 33 in Fig. 3). Beim Fahrzeugzug 302 gemäß Fig. 1 hat der Knickwinkel γ einen Wert von 0°, da das Anhängerfahrzeug 306 gerade hinter dem Zugfahrzeug 204 herfährt. Im Rahmen einer Kurvenfahrt des Fahrzeugzugs 302 nimmt der Knickwinkel γ zu und das Risiko für Instabilitäten steigt. Im gezeigten Ausführungsbeispiel des Verfahrens 1 ist daher vorgesehen, dass die maximal zulässige Dauerverzögerungsleistung LB_max Limitiert wird, wenn der Knickwinkel γ einen Knickwinkelgrenzwert γ_lim überschreitet. Der Knickwinkelgrenzwert γ_lim berücksichtigt hier, dass bestimmte Werte des Knickwinkels γ in Hinblick auf die Stabilität des Fahrzeugzugs 302 unbedenklich und im Rahmen einer Kurvenfahrt auch unvermeidbar sind. Daher erfolgt das Limitieren 35 vorzugsweise nur dann, wenn der Knickwinkel γ den Knickwinkelgrenzwert γ_lim überschreitet. Der Knickwinkelgrenzwert γ_lim ist im vorliegenden Ausführungsbeispiel ein dynamischer Grenzwert, der auch die Kurvenkrümmung K berücksichtigt. So hat der Knickwinkelgrenzwert γ_lim hier bei großen Kurvenkrümmungen K einen höheren Wert als bei kleinen Kurvenkrümmungen K, da bei engeren Kurven in der Regel auch größere Knickwinkel γ zwischen Zugfahrzeug 304 und Anhängerfahrzeug 306 auftreten.

Zum Definieren 41 des dynamischen Knickwinkelgrenzwerts γ_lim umfasst das Verfahren 1 zunächst ein Ermitteln 39 eines Soll-Knickwinkels γ_Soll zwischen Zugfahrzeug 304 und Anhängerfahrzeug 306. Der Soll-Knickwinkel γ_Soll wird unter Verwendung der Kurvenkrümmung K ermittelt. Das Berücksichtigen der Kurvenkrümmung beim Ermitteln 39 des Soll-Knickwinkels γ_Soll ist in Fig. 3 durch die Verbindung der Blöcke 27 und 39 verdeutlicht. Die Steuereinheit 202 ermittelt unter Verwendung der Kurvenkrümmung K sowie geometrischer Charakteristika (bspw. dem Achsabstand L11, dem Liftstatus S_L) und vorzugsweise einer aktuellen Geschwindigkeit V des Fahrzeugzugs 302 den Soll-Knickwinkel γ_Soll. Die Steuereinheit 202 prädiziert dabei den Soll-Knickwinkel γ_Soll als Prognosewert des tatsächlich beim Durchfahren der Kurve auftretenden Knickwinkels γ. In alternativen Ausführungsformen kann der Soll-Knickwinkel γ_Soll aber auch basierend auf der Trajektorie T ermittelt werden. So kann der Soll-Knickwinkel γ_Soll beispielsweise bereits von der autonomen Einheit 380 ermittelt und über das Fahrzeugnetzwerk 372 an der Steuereinheit 202 bereitgestellt werden. Im Anschluss an das Ermitteln 39 des Soll-Knickwinkels γ_Soll definiert die Steuereinheit 202 den dynamischen Knickwinkelgrenzwert γ_lim. Zu diesem Zweck addiert die Steuereinheit 202 hier einen Pufferwinkel Δγ zum Soll-Knickwinkel γ_Soll und definiert so den Knickwinkelgrenzwert (γ_lim = γ_Soll+Δγ). Alternativ zu dem Definieren 41 kann aber auch vorgesehen sein, dass der Knickwinkelgrenzwert γ_lim ein statischer Grenzwert mit einem festen Wert von beispielsweise 45° ist.

Zusätzlich zu den vorgenannten Einflussfaktoren wird das Limitieren 13 im gezeigten Ausführungsbeispiel des Verfahrens 1 ferner basierend auf einem gegenwärtigen Reibschlussbeiwert µ und basierend auf dem Gefälle 368 der Fahrbahn 366 durchgeführt. Dem Limitieren 49 der maximal zulässigen Dauerverzögerungsleistung LB_max zusätzlich basierend auf dem gegenwärtigen Reibschlussbeiwert µ geht ein Ermitteln 45 des gegenwärtigen Reibschlussbeiwerts µ voraus. Im vorliegenden Ausführungsbeispiel erfolgt das Ermitteln 45 des gegenwärtigen Reibschlussbeiwerts µ unter Verwendung der Fahrzeugsignale SV. So können Fahrzeugsignale SV, die den gegenwärtigen Reibschlussbeiwert µ repräsentieren beispielsweise durch ein herkömmliches Stabilitätsregelsystem 282, das auch als Electronic Stabilty Control (ESC) bezeichnet werden kann, auf dem Fahrzeugnetzwerk 372 bereitgestellt werden. Alternativ kann der gegenwärtige Reibschlussbeiwert µ zwischen den Rädern 318, 324, 334 des Fahrzeugzugs 302 und der Fahrbahn 366 aber auch basierend auf Raddrehzahlen freirollender Räder 318, 324, 334 ermittelt werden. Ein geringer Reibschlussbeiwert µ bzw. ein großer Schlupf zwischen den Rädern 318, 324, 334 des Fahrzeugzugs 302 und der Fahrbahn 308 erhöht das Risiko für Instabilitäten des Fahrzeugs 300, sodass die maximal zulässige Dauerverzögerungsleistung LB_max vorzugsweise limitiert wird (Limitieren 49), wenn der Reibschlussbeiwert µ gering ist. So wird die maximal zulässige Dauerverzögerungsleistung LB_max vorzugsweise bei einem ermittelten Reibschlussbeiwert µ, der kleiner ist als ein Mindestreibschlussbeiwert, um einen festen Wert oder relativ zum ermittelten Reibschlussbeiwert µ begrenzt. Wenn der ermittelte Reibschlussbeiwert µ hingegen den Mindestreibschlussbeiwert übersteigt, kann das Limitieren 49 basierend auf dem Reibschlussbeiwert µ auch entfallen.

Alternativ oder ergänzend zum Ermitteln 45 des gegenwärtigen Reibschlussbeiwerts µ aus den Fahrzeugsignalen SV kann das Ermitteln 45 beispielsweise auch schlupfbasiert erfolgen. Im vorliegenden Ausführungsbeispiel kann ein Bremsschlupf der Hinterräder 324a, 324b, die durch die Dauerverzögerungseinrichtung 338 verzögert werden, durch einen Vergleich der Raddrehzahlen der Hinterräder 324a, 324b mit Drehzahlen der ungebremsten Vorderräder 318a, 318b ermittelt werden. Die Hinterräder 324a, 324b werden vorliegend auch als Prüfräder bezeichnet, während die Vorderräder 318a, 318b auch als Vergleichsräder bezeichnet werden können. Während eines Zeitabschnitts, in dem die Vorderräder bzw. Vergleichsräder 318a, 318b frei Rollen und die Hinterräder bzw. Prüfräder 324a, 324b durch die Dauerverzögerungseinrichtung 338 verzögert werden, wird in diesem Ausführungsbeispiel auch eine Prüfstellgröße der Dauerverzögerungseinrichtung 338 ermittelt. Beispielsweise kann ein Steuerdruck des Retarders 340 die Prüfstellgröße sein. Aus dem für den Zeitabschnitt ermittelten Bremsschlupf und der zugehörigen Prüfstellgröße wird im vorliegenden Ausführungsbeispiel der gegenwärtige Reibschlussbeiwert µ ermittelt werden. Hier wird ein zu dem Wertepaar aus Bremsschlupf und Prüfstellgröße korrespondierender gegenwärtiger Reibschlussbeiwert µ aus einer vorgespeicherten Kennlinie ermittelt. Die Kennlinie kann beispielsweise in vorherigen Fahrversuchen ermittelt und (z.B. im ESC) vorgespeichert sein. Ein zum Ermitteln des gegenwärtigen Reibschlussbeiwerts µ verwendeter Schlupf kann aber vorzugsweise auch dann ermittelt werden, wenn eine normale Betriebsbremsung durchgeführt wird.

Vorzugsweise können auch noch weitere Parameter beim Ermitteln des gegenwärtigen Reibschlussbeiwerts µ berücksichtigt werden. Beispielsweise kann eine im Zeitabschnitt auf das Fahrzeug wirkende Querbeschleunigung ermittelt werden, wobei eine zum Ermitteln des gegenwärtigen Reibschlussbeiwerts µ verwendete Kennlinie unter Berücksichtigung der ermittelten Querbeschleunigung aus einer Mehrzahl vorgespeicherter Kennlinien ausgewählt wird.

Bevorzugt kann die maximal zulässige Dauerverzögerungsleistung auch basierend auf einer ermittelten Querbeschleunigung limitiert werden. So kann beispielsweise eine Dauerverzögerungsleistung der Dauerverzögerungseinrichtung 338 in einem Querbeschleunigungsbereich von 1 m/s² bis 2 m/s² reduziert werden. Bei auftretenden oder erwarteten Querbeschleunigungen von größer 2 m/s² wird die Dauerverzögerungseinrichtung 338 vorzugsweise am Bereitstellen einer Dauerverzögerungsleistung LB gehindert bzw. die maximal zulässige Dauerverzögerungsleistung LB_max auf null limitiert.

Das Gefälle 368 der Fahrbahn 366 wird im Verfahren 1 ebenfalls beim Limitieren 15 der maximal zulässigen Dauerverzögerungsleistung LB_max berücksichtigt. So ermittelt die Steuereinheit 202 im gezeigten Ausführungsbeispiel des Verfahrens 1 unter Verwendung von Fahrzeugsignalen SV, die von dem Stabilitätsregelsystem 282 bereitgestellt werden, das Gefälle 368 (Ermitteln 51 in Fig. 3). In den Figuren nicht dargestellte Sensoren des Stabilitätsregelsystem 282 erkennen das Gefälle, sodass das Stabilitätsregelsystem 282 das Gefälle 368 repräsentierende Signale auf dem Fahrzeugnetzwerk 372 bereitstellen kann. Anschließend an das Ermitteln 51 des Gefälles 368 der Fahrbahn 366 wird dann ein Limitieren 55 der maximal zulässigen Dauerverzögerungsleistung LB_max zusätzlich basierend auf dem ermittelten Gefälle 368 durchgeführt.

Auch wenn die Limitierungsschritte 19, 31, 35, 49, 55 in Fig. 3 als separate Limitierungen dargestellt sind, soll der umgebende Limitierungsschritt 13 verdeutlichen, dass die maximal zulässige Dauerverzögerungsleistung LB_max im gezeigten Ausführungsbeispiel simultan basierend auf dem Masseverhältnis RM, der Kupplungslänge LL, der Kurvenkrümmung K, dem Knickwinkel γ, dem Reibschlussbeiwert µ und dem Gefälle 368 erfolgt. So erfolgt das Limitieren 13 hier durch Addieren entsprechender Limits der maximal zulässigen Dauerverzögerungsleistung LB_max, die im Rahmen der Limitierungen 19, 31, 35, 49, 55 ermittelt wurden. Die maximal zulässige Dauerverzögerungsleistung LB_max ist also im vorliegenden Ausführungsbeispiel die Summe aus einer Leistungslimitierung basierend auf dem Masseverhältnis RM, einer Leistungslimitierung basierend auf der Kupplungslänge LL, einer Leistungslimitierung basierend auf der Kurvenkrümmung K, einer Leistungslimitierung basierend auf dem Knickwinkel γ und einer Leistungslimitierung basierend auf dem Gefälle 368. Die maximal zulässige Dauerverzögerungsleistung LB_max wird hier kontinuierlich berechnet.

Sobald die Dauerverzögerungseinrichtung 338 aktiviert wird, wird die maximal zulässige Dauerverzögerungsleistung LB_max bestimmt und die tatsächlich von der Dauerverzögerungseinrichtung 338 ausgesteuerte Dauerverzögerungsleistung LB auf dieses Maß limitiert. Wenn demnach von einem Fahrer des Fahrzeugs 300 eine Dauerverzögerungsleistung LB angefordert wird, die größer ist als die maximal zulässige Dauerverzögerungsleistung LB_max, dann stellt die Dauerverzögerungseinrichtung 338 höchstens die maximal zulässige Dauerverzögerungsleistung LB_max bereit. Ist die geforderte Dauerverzögerungsleistung LB hingegen kleiner als die maximal zulässige Dauerverzögerungsleistung LB_max, stellt die Dauerverzögerungseinrichtung 338 die angeforderte Dauerverzögerungsleistung LB bereit. Bei einer hebelbetätigten Dauerbremseinrichtung 338, in der die Dauerverzögerungsleistung LB in diskreten Stufen hinterlegt ist, wird die Dauerverzögerungsleistung LB gegebenenfalls auch dann nicht weiter aufgeschaltet, wenn der Fahrer den Hebel hin zu einer höheren Dauerverzögerungsleistung LB verstellt.

Aufgrund des Limitierens 13 der maximal zulässigen Dauerverzögerungsleistung LB stellt die Dauerverzögerungseinrichtung 338 gegebenenfalls eine geringere Dauerverzögerungsleistung LB bereit als von dem Fahrer des Fahrzeugs 300 angefordert wird und/oder als nötig ist, um das Fahrzeug 300 mit konstanter Geschwindigkeit entlang der das Gefälle 368 aufweisenden Fahrbahn 366 zu führen. Vorzugswiese wird zum Ausgleichen dieser Diskrepanz zwischen geforderter Dauerverzögerungsleistung (LB_Soll) und bereitgestellter Dauerverzögerungsleistung LB eine Kompensationsverzögerungsleistung ΔLB bereitgestellt. Dieses Bereitstellen 57 der Kompensationsverzögerungsleistung ΔLB ist in Fig. 3 ebenfalls dargestellt. Vorzugsweise bringt das Bremssystem 308 des Fahrzeugs 300 die Kompensationsverzögerungsleistung ΔLB automatisch auf, sobald ein Grenzwert für eine Abweichung zwischen der geforderten Dauerverzögerungsleistung LB_Soll und der tatsächlich bereitgestellten Dauerverzögerungsleistung LB überschritten ist. Das Bereitstellen 57 der Kompensationsverzögerungsleistung ΔLB erfolgt vorzugsweise durch Betätigen von Bremsaktuatoren 316, 326, 332 des Bremssystems 308, die nicht derjenigen Achse des Fahrzeugs 300 zugeordnet sind, an der auch die Dauerverzögerungseinrichtung 338 wirkt. Beim Fahrzeug 300 gemäß Fig. 1 sind das die Vorderachsbremsaktuatoren 316, die Anhängerbremsaktuatoren 332 und die der Liftachse 352 zugeordneten Hinterachsbremsaktuatoren 326c, 326d. Durch das Einbremsen aller Achsen 320, 352 des Fahrzeugzuges 302, mit Ausnahme der Hinterachse 350, an der die Dauerverzögerungseinrichtung 338 wirkt, wird die Fahrstabilität des Fahrzeugzugs 302 erhöht, da eine Bremskraftverteilung entsprechend der Masseverteilung RM eingestellt werden kann.

Alternativ oder Ergänzend ist im Verfahren 1 ferner ein Durchführen 63 einer Streckbremsung des Fahrzeugzugs 302 durch eine Anhängerverzögerungseinrichtung 384, die die Anhängerbremsaktuatoren 332 umfasst, vorgesehen. Abweichend von einer an der Masseverteilung RM orientierten Bremskraftverteilung kann also auch eine gezielte Streckbremsung des Fahrzeugzugs 302 erfolgen, bei der das Anhängerfahrzeug 306 einen größeren Anteil der Verzögerung realisiert als das Zugfahrzeug 304. Vorzugsweise wird die Streckbremsung insbesondere bei kleinen Kurvenradien ausgeführt. Ferner wird die Streckbremsung im vorliegenden Ausführungsbeispiel des Verfahrens 1 nur dann durchgeführt (Durchführen 63 in Fig. 3), wenn die geforderte Dauerverzögerungsleistung LB_Soll größer ist als die maximal zulässige Dauerverzögerungsleistung LB_max.

Die Steuereinheit 202 des Fahrerassistenzsystems 200 ist ferner dazu ausgebildet, ein Warnsignal W auszugeben, falls die maximal zulässige Dauerverzögerungsleistung LB_max geringer ist, als die technisch mögliche Dauerverzögerungsleistung LB_tech der Dauerverzögerungseinrichtung 338. Dieses Ausgeben 67 eines Warnsignals W ist im Verfahren 1 gemäß Fig. 3 illustriert. So wird einem menschlichen oder virtuellen Fahrer (bspw. der autonomen Einheit 380) optional aber nicht notwendigerweise ein Hinweis gegeben, dass die von ihm/ihr geforderte Dauerverzögerungsleistung LB_Soll nicht über die Dauerverzögerungseinrichtung 338 erbracht wird und eine Umverteilung auf die Betriebsbremse stattfindet oder stattfinden sollte. So kann der Fahrer die Betätigung bzw. Dosierung der Dauerverzögerungseinrichtung 338 erlernen und seine Fahrweise und Betätigungsweise in vergleichbaren Fahrsituationen anpassen. Das Ausgeben 67 kann optisch über eine Lampe, akustisch, haptisch und/oder digital erfolgen. So kann beispielsweise die Steuereinheit 202 des Fahrerassistenzsystems 200 das Warnsignal W auf dem Fahrzeugnetzwerk 372 bereitstellen, sodass das Warnsignal W von der autonomen Einheit 380 des Fahrzeugs 300 empfangen werden kann.

### Bezugszeichen (Teil der Beschreibung)

- 1: Verfahren
- 5: Ermitteln einer Anhängermasse
- 7: Ermitteln einer Zugfahrzeugmasse
- 9: Ermitteln eines Masseverhälntisses
- 13: Limitieren einer maximal zulässigen Dauerverzögerungsleistung
- 15: Ermitteln einer Kupplungslänge
- 19: Limitieren einer maximal zulässigen Dauerverzögerungsleistung zusätzlich basierend auf der Kupplungslänge
- 21: Ermitteln eines Liftstatus
- 23: Ermitteln einer Position einer Achsgruppenmitte
- 27: Ermitteln einer Kurvenkrümmung
- 31: Limitieren einer maximal zulässigen Dauerverzögerungsleistung zusätzlich basierend auf der Kurvenkrümmung
- 33: Ermitteln eines Knickwinkels
- 35: Limitieren einer maximal zulässigen Dauerverzögerungsleistung zusätzlich basierend auf einem Knickwinkel
- 39: Ermitteln eines Soll-Knickwinkels
- 41: Definieren eines dynamischen Knickwinkelgrenzwerts
- 45: Ermitteln eines gegenwärtigen Reibschlussbeiwerts
- 49: Limitieren einer maximal zulässigen Dauerverzögerungsleistung zusätzlich basierend auf dem Reibschlussbeiwert
- 51: Ermitteln eines Gefälles
- 55: Limitieren einer maximal zulässigen Dauerverzögerungsleistung zusätzlich basierend auf dem Gefälle
- 57: Bereitstellen einer Kompensationsverzögerungsleistung
- 63: Durchführen einer Streckbremsung
- 67: Ausgeben eines Warnsignals
- 200: Fahrerassistenzsystem
- 202: Steuereinheit
- 204: Schnittstelle
- 300: Fahrzeug
- 301: gegenwärtige Fahrzeugkonfiguration
- 302: Fahrzeugzug
- 304: Zugfahrzeug
- 306: Anhängerfahrzeug
- 308: Bremssystem
- 310: Vorderachsbremskreis
- 312: Hinterachsbremskreis
- 314: Anhängerbremskreis
- 316, 316a, 316b: Vorderachsbremsaktuatoren
- 318a, 318b: Vorderräder
- 320: Vorderachse
- 322: Hinterachsgruppe
- 324, 324a, 324b, 324c, 324d: Hinterräder
- 326, 326c, 326d: Hinterachsbremsaktuator
- 328c, 328d: Betriebsbremsteil
- 330c, 330d: Federspeicherteil
- 332, 332a, 332b, 332c, 332d: Anhängerbremsaktuator
- 334a, 334b, 334c, 334d: Anhängerräder
- 336: Bremsmodulator
- 338: Dauerverzögerungseinrichtung
- 340: Retarder
- 342: Betätigungshebel
- 344: Lastkraftwagen
- 346: Deichselanhänger
- 348: Deichsel
- 350: Hinterachse
- 352: liftbare Zusatzachse, Liftachse
- 354: erste Ladefläche
- 356: zweite Ladefläche
- 358: erste Ladung
- 360: zweite Ladung
- 362: Zugfahrzeugschwerpunkt
- 364: Anhängerfahrzeugschwerpunkt
- 366: Fahrbahn
- 368: Gefälle
- 370: Kupplung
- 372: Fahrzeugnetzwerk
- 374: Hebelarm
- 376: Achsgruppenmitte
- 378: Kupplungspunkt
- 380: autonome Einheit
- 382: Stabilitätsregelsystem
- 384: Anhängerverzögerungseinrichtung
- ECU: Hauptsteuereinheit
- ECU2: Anhängersteuereinheit
- F: Kupplungskraft
- K: Kurvenkrümmung
- LB: Dauerverzögerungsleistung
- LB_max: maximal zulässige Dauerverzögerungsleistung
- LB_Soll: geforderte Dauerverzögerungsleistung
- LB_tech: technisch mögliche Dauerverzögerungsleistung
- LL: Kupplungslänge
- L11: Achsabstand
- L12: Liftachsenabstand
- L13: Kupplungsabstand
- m1: Zugfahrzeugmasse
- m2: Anhängermasse
- m_ges: Fahrzeuggesamtmasse
- RM: Masseverhältnis
- STR: Anhängersignale
- SV: Fahrzeugsignale
- S_L: Liftstatus
- T: Trajektorie
- V: Geschwindigkeit
- W: Warnsignal
- γ: Knickwinkel
- γ_lim: Knickwinkelgrenzwert
- γ_Soll: Soll-Knickwinkel
- ΔLB: Kompensationsverzögerungsleistung
- Δγ: Pufferwinkel
- µ: Reibschlussbeiwert

## Patentansprüche

1. Verfahren (1) zum Steuern eines Fahrzeugzugs (302), mit einem Zugfahrzeug (304) und zumindest einem Anhängerfahrzeug (306), wobei das Zugfahrzeug (304) eine Dauerverzögerungseinrichtung (338) aufweist, die zum Durchführen einer Dauerverzögerung vorgesehen ist, das Verfahren (1) aufweisend:
- Ermitteln (5) einer Anhängermasse (m2) des Anhängerfahrzeugs (306) in der gegenwärtigen Fahrzeugkonfiguration (301) des Fahrzeugzugs (302);
- Ermitteln (7) einer Zugfahrzeugmasse (m2) des Zugfahrzeugs (304) in der gegenwärtigen Fahrzeugkonfiguration (301);
- Ermitteln (9) eines Masseverhältnisses (RM) der gegenwärtigen Fahrzeugkonfiguration (301) basierend auf der Anhängermasse (m2) und der Zugfahrzeugmasse (m1); und
- Limitieren (13) einer maximal zulässigen Dauerverzögerungsleistung (LB_max) der Dauerverzögerungseinrichtung (338) basierend auf dem Masseverhältnis (RM).

2. Verfahren (1) nach Anspruch 1, wobei die maximal zulässige Dauerverzögerungsleistung (LB_max) mit steigendem relativen Anteil der Anhängermasse (m2) an einer Gesamtmasse (m_ges) des Fahrzeugzugs (302) reduziert wird.

3. Verfahren (1) nach Anspruch 1 oder 2, ferner aufweisend:
- Ermitteln (15) einer Kupplungslänge (LL) für eine Kupplungskraft (F), die in einem Betrieb des Fahrzeugzugs (302) zwischen dem Zugfahrzeug (304) und dem Anhängerfahrzeug (306) wirkt; und
- Limitieren (19) der maximal zulässigen Dauerverzögerungsleistung (LB_max) der Dauerverzögerungseinrichtung (338) zusätzlich basierend auf der Kupplungslänge (LL), wobei vorzugsweise die maximal zulässige Dauerverzögerungsleistung (LB_max) mit steigender Kupplungslänge (LL) zunehmend limitiert wird.

4. Verfahren (1) nach Anspruch 3, wobei das Ermitteln (15) der Kupplungslänge (LL) aufweist:
- Ermitteln (21) eines Liftstatus (S_L) einer Liftachse (352) des Zugfahrzeugs (304);
- Ermitteln eines Anhängertyps des Anhängerfahrzeugs (306);
- Ermitteln eines Kupplungspunkts (378) unter Verwendung des Anhängertyps;
- Ermitteln (23) einer in einer Fahrtrichtung hintersten Achse des Zugfahrzeugs; und
- Ermitteln der Kupplungslänge (LL) als Abstand zwischen der in Fahrtrichtung hintersten Achse und dem Kupplungspunkt (378) des Zugfahrzeugs (304), wobei der Abstand in einer Fahrzeuglängsrichtung (R1) ermittelt wird.

5. Verfahren (1) nach einem Ansprüche 1 bis 4, ferner aufweisend:
- Ermitteln (27) einer Kurvenkrümmung (K) einer von dem Fahrzeugzug (302) zu befahrenden Fahrbahn (366); und
- Limitieren (31) der maximal zulässigen Dauerverzögerungsleistung (LB_max) der Dauerverzögerungseinrichtung (338) zusätzlich basierend auf der ermittelten Kurvenkrümmung (K).

6. Verfahren (1) nach einem der Ansprüche 1 bis 5, ferner aufweisend:
- Ermitteln (33) eines Knickwinkels (γ) zwischen Zugfahrzeug (304) und Anhängerfahrzeug (306); und
- Limitieren (35) der maximal zulässigen Dauerverzögerungsleistung (LB_max) der Dauerverzögerungseinrichtung (338), falls der Knickwinkel (γ) einen Knickwinkelgrenzwert (γ_lim) überschreitet.

7. Verfahren (1) nach Anspruch 6, ferner aufweisend
- Ermitteln (39) eines Soll-Knickwinkels (γ_Soll) zwischen Zugfahrzeug (304) und Anhängerfahrzeug (306); und
- Definieren (41) des Knickwinkelgrenzwerts (γ_lim) als dynamischen Knickwinkelgrenzwert (γ_lim), der dem Soll-Knickwinkel (γ_Soll) zuzüglich eines Pufferwinkels (Δγ) entspricht.

8. Verfahren (1) nach einem der Ansprüche 1 bis 7, ferner aufweisend:
- Ermitteln (45) eines gegenwärtigen Reibschlussbeiwerts (µ) für den Fahrzeugzug (302); und
- Limitieren (49) der maximal zulässigen Dauerverzögerungsleistung (LB_max) der Dauerverzögerungseinrichtung (338) zusätzlich basierend auf dem gegenwärtigen Reibschlussbeiwert (µ).

9. Verfahren (1) nach einem der Ansprüche 1 bis 8, ferner aufweisend:
- Ermitteln (51) eines Gefälles (368) einer vom Fahrzeugzug (302) befahrenen Fahrbahn (366); und
- Limitieren (55) der zulässigen Dauerverzögerungsleistung (LB_max) der Dauerverzögerungseinrichtung (338) zusätzlich basierend auf dem ermittelten Gefälle (368).

10. Verfahren (1) nach einem der Ansprüche 1 bis 9, ferner aufweisend:
- Bereitstellen (57) einer Kompensationsverzögerungsleistung (ΔLB) an einer oder mehreren Achsen (320, 352) des Fahrzeugzugs (302), die von der Dauerverzögerungseinrichtung (338) unabhängig sind, um eine durch das Limitieren (13, 19, 31, 35, 49, 55) der zulässigen Dauerverzögerungsleistung (LB_max) der Dauerverzögerungseinrichtung (338) auftretende Fehlverzögerungsleistung zumindest teilweise zu kompensieren.

11. Verfahren (1) nach einem der Ansprüche 1 bis 10, ferner aufweisend:
- Durchführen (63) einer Streckbremsung des Fahrzeugzugs (302) durch eine Anhängerverzögerungseinrichtung (382) des Anhängerfahrzeugs (306), falls eine geforderte Dauerverzögerungsleistung (LB_Soll) für den Fahrzeugzug (302) größer ist als die maximal zulässige Dauerverzögerungsleistung (LB_max).

12. Verfahren (1) nach einem der Ansprüche 1 bis 11, ferner aufweisend:
- Ausgeben (67) eines Warnsignals (W), falls die maximal zulässige Dauerverzögerungsleistung (LB_max) geringer ist, als eine technisch mögliche Dauerverzögerungsleistung (LB_tech) der Dauerverzögerungseinrichtung (338).

13. Fahrerassistenzsystem (200) für ein Nutzfahrzeug (300), aufweisend eine Steuereinheit, die zum Empfangen von Signalen mit zumindest einem Netzwerk des Fahrzeugzugs verbindbar ist, und eine Schnittstelle zu einer Dauerverzögerungseinrichtung des Zugfahrzeugs, wobei das Fahrerassistenzsystem (200) dazu ausgebildet ist, das Verfahren (1) gemäß einem der vorstehenden Ansprüche 1 bis 12 auszuführen.

14. Nutzfahrzeug (300) aufweisend eine Dauerverzögerungseinrichtung (338) und ein Fahrerassistenzsystem (200) nach Anspruch 13.

15. Computerprogrammproduckt mit Progammcode-Mitteln, die auf einem computerlesbaren Datenträger gespeichert sind, um das Verfahren (1) nach einem der Ansprüche 1 bis 12 auszuführen, wenn das Computerprogrammprodukt auf einer Recheneinheit ausgeführt wird.

## Claims

1. Method (1) for controlling a vehicle combination (302) comprising a towing vehicle (304) and at least one trailer vehicle (306), wherein the towing vehicle (304) has a continuous deceleration device (338) which is intended to carry out a continuous deceleration, the method (1) comprising:
- determining (5) a trailer mass (m2) of the trailer vehicle (306) in the current vehicle configuration (301) of the vehicle combination (302);
- determining (7) a towing vehicle mass (m2) of the towing vehicle (304) in the current vehicle configuration (301);
- determining (9) a mass ratio (RM) of the current vehicle configuration (301) on the basis of the trailer mass (m2) and the towing vehicle mass (m1); and
- limiting (13) a maximum permissible continuous deceleration power (LB_max) of the continuous deceleration device (338) on the basis of the mass ratio (RM).

2. Method (1) according to claim 1, wherein the maximum permissible continuous deceleration power (LB_max) is reduced as the relative proportion of the trailer mass (m2) to a total mass (m_ges) of the vehicle combination (302) increases.

3. Method (1) according to claim 1 or 2, further comprising:
- determining (15) a coupling length (LL) for a coupling force (F) which acts between the towing vehicle (304) and the trailer vehicle (306) during an operation of the vehicle combination (302); and
- limiting (19) the maximum permissible continuous deceleration power (LB_max) of the continuous deceleration device (338) additionally on the basis of the coupling length (LL), wherein the maximum permissible continuous deceleration power (LB_max) is preferably increasingly limited as the coupling length (LL) increases.

4. Method (1) according to claim 3, wherein the determination (15) of the coupling length (LL) comprises:
- determining (21) a lift status (S_L) of a lift axle (352) of the towing vehicle (304);
- determining a trailer type of the trailer vehicle (306);
- determining a coupling point (378) using the trailer type;
- determining (23) a rearmost axle of the towing vehicle in a direction of travel; and
- determining the coupling length (LL) as a distance between the rearmost axle in the direction of travel and the coupling point (378) of the towing vehicle (304), wherein the distance is determined in a longitudinal direction (R1) of the vehicle.

5. Method (1) according to any of claims 1 to 4, further comprising:
- determining (27) a bend curvature (K) of a roadway (366) to be traveled on by the vehicle combination (302); and
- limiting (31) the maximum permissible continuous deceleration power (LB_max) of the continuous deceleration device (338) additionally on the basis of the determined bend curvature (K).

6. Method (1) according to any of claims 1 to 5, further comprising:
- determining (33) an articulation angle (γ) between towing vehicle (304) and trailer vehicle (306); and
- limiting (35) the maximum permissible continuous deceleration power (LB_max) of the continuous deceleration device (338) if the articulation angle (γ) exceeds an articulation angle limit value (γ_lim).

7. Method (1) according to claim 6, further comprising
- determining (39) a target articulation angle (γ_Soll) between towing vehicle (304) and trailer vehicle (306); and
- defining (41) the articulation angle limit value (γ_lim) as a dynamic articulation angle limit value (γ_lim) which corresponds to the target articulation angle (γ_Soll) plus a buffer angle (Δγ).

8. Method (1) according to any of claims 1 to 7, further comprising:
- determining (45) a current coefficient of friction (µ) for the vehicle combination (302); and
- limiting (49) the maximum permissible continuous deceleration power (LB_max) of the continuous deceleration device (338) additionally on the basis of the current coefficient of friction (µ).

9. Method (1) according to any of claims 1 to 8, further comprising:
- determining (51) a downhill gradient (368) of a roadway (366) traveled on by the vehicle combination (302); and
- limiting (55) the permissible continuous deceleration power (LB_max) of the continuous deceleration device (338) additionally on the basis of the determined downhill gradient (368).

10. Method (1) according to any of claims 1 to 9, further comprising:
- providing (57) a compensation deceleration power (ΔLB) at one or more axles (320, 352) of the vehicle combination (302) that are independent of the continuous deceleration device (338), in order to at least partially compensate for an incorrect deceleration power occurring as a result of the limiting (13, 19, 31, 35, 49, 55) of the permissible continuous deceleration power (LB_max) of the continuous deceleration device (338).

11. Method (1) according to any of claims 1 to 10, further comprising:
- carrying out (63) anti-jack-knife braking of the vehicle combination (302) by a trailer deceleration device (382) of the trailer vehicle (306) if a required continuous deceleration power (LB_Soll) for the vehicle combination (302) is greater than the maximum permissible continuous deceleration power (LB_max).

12. Method (1) according to any of claims 1 to 11, further comprising:
- outputting (67) a warning signal (W) if the maximum permissible continuous deceleration power (LB_max) is less than a technically possible continuous deceleration power (LB_tech) of the continuous deceleration device (338).

13. Driver assistance system (200) for a commercial vehicle (300), comprising a control unit which can be connected to at least one network of the vehicle combination in order to receive signals, and an interface to a continuous deceleration device of the towing vehicle, wherein the driver assistance system (200) is designed to execute the method (1) according to any of the preceding claims 1 to 12.

14. Commercial vehicle (300) comprising a continuous deceleration device (338) and a driver assistance system (200) according to claim 13.

15. Computer program product comprising program code means which are stored on a computer-readable data carrier in order to execute the method (1) according to any of claims 1 to 12 when the computer program product is executed on a computing unit.

## Revendications

1. Procédé (1) pour la commande d'un ensemble routier (302), comportant un véhicule tracteur (304) et au moins une remorque (306), dans lequel le véhicule tracteur (304) présente un dispositif de décélération continue (338) qui est prévu pour réaliser une décélération continue, le procédé (1) présentant :
- la détermination (5) d'un masse de remorque (m2) de la remorque (306) dans la configuration de véhicule actuelle (301) de l'ensemble routier (302) ;
- la détermination (7) d'une masse de véhicule tracteur (m2) du véhicule tracteur (304) dans la configuration de véhicule actuelle (301) ;
- la détermination (9) d'un rapport de masse (RM) de la configuration de véhicule actuelle (301) en fonction de la masse de remorque (m2) et de la masse de véhicule tracteur (m1) ; et
- la limitation (13) d'une puissance de décélération continue maximale admissible (LB_max) du dispositif de décélération continue (338) en fonction du rapport de masse (RM).

2. Procédé (1) selon la revendication 1, dans lequel la puissance de décélération continue maximale admissible (LB_max) est réduite à mesure que la proportion relative de la masse de remorque (m2) par rapport à une masse totale (m_ges) de l'ensemble routier (302) augmente.

3. Procédé (1) selon la revendication 1 ou 2, présentant en outre :
- la détermination (15) d'une longueur d'attelage (LL) pour une force d'attelage (F) agissant entre le véhicule tracteur (304) et la remorque (306) lors du fonctionnement de l'ensemble routier (302) ; et
- la limitation (19) de la puissance de décélération continue maximale admissible (LB_max) du dispositif de décélération continue (338) en fonction en outre de la longueur d'attelage (LL), dans lequel, de préférence, la puissance de décélération continue maximale admissible (LB_max) est limitée de manière croissante à mesure que la longueur d'attelage (LL) augmente.

4. Procédé (1) selon la revendication 3, dans lequel la détermination (15) de la longueur d'attelage (LL) présente :
- la détermination (21) d'un état de levage (S_L) d'un axe de levage (352) du véhicule tracteur (304) ;
- la détermination d'un type de remorque de la remorque (306) ;
- la détermination d'un point d'attelage (378) à l'aide du type de remorque ;
- la détermination (23) d'un essieu du véhicule tracteur le plus en arrière dans le sens de la marche ; et
- la détermination de la longueur d'attelage (LL) comme distance entre l'essieu le plus en arrière dans le sens de la marche et le point d'attelage (378) du véhicule tracteur (304), dans lequel la distance est mesurée dans la direction longitudinale de véhicule (R1).

5. Procédé (1) selon l'une des revendications 1 à 4, présentant en outre :
- la détermination (27) d'une courbure (K) d'une chaussée (366) que doit emprunter l'ensemble routier (302) ; et
- la limitation (31) de la puissance de décélération continue maximale admissible (LB_max) du dispositif de décélération continue (338) en fonction en outre de la courbure (K) déterminée.

6. Procédé (1) selon l'une des revendications 1 à 5, présentant en outre :
- la détermination (33) d'un angle de flexion (γ) entre le véhicule tracteur (304) et la remorque (306) ; et
- la limitation (35) de la puissance de décélération continue maximale admissible (LB_max) du dispositif de décélération continue (338) si l'angle de flexion (γ) dépasse une valeur limite d'angle de flexion (γ_lim).

7. Procédé (1) selon la revendication 6, présentant en outre
- la détermination (39) d'un angle de flexion de consigne (γ_Soll) entre le véhicule tracteur (304) et la remorque (306) ; et
- la définition (41) de la valeur limite d'angle de flexion (γ_lim) comme valeur limite dynamique d'angle de flexion (γ_lim) qui correspond à l'angle de flexion de consigne (γ_Soll) augmenté d'un angle supplémentaire (Δγ).

8. Procédé (1) selon l'une des revendications 1 à 7, présentant en outre :
- la détermination (45) d'un coefficient de liaison par friction actuel (µ) pour l'ensemble routier (302) ; et
- la limitation (49) de la puissance de décélération continue maximale admissible (LB_max) du dispositif de décélération continue (338) en fonction en outre du coefficient de liaison par friction actuel (µ).

9. Procédé (1) selon l'une des revendications 1 à 8, présentant en outre :
- la détermination (51) d'une pente (368) d'une chaussée (366) empruntée par l'ensemble routier (302) ; et
- la limitation (55) de la puissance de décélération continue admissible (LB_max) du dispositif de décélération continue (338) en fonction en outre de la pente (368) déterminée.

10. Procédé (1) selon l'une des revendications 1 à 9, présentant en outre :
- la fourniture (57) d'une puissance de décélération de compensation (ΔLB) sur un ou plusieurs essieux (320, 352) de l'ensemble routier (302) qui sont indépendants du dispositif de décélération continue (338) afin de compenser au moins partiellement une puissance de décélération insuffisante résultant de la limitation (13, 19, 31, 35, 49, 55) de la puissance de décélération continue admissible (LB_max) du dispositif de décélération continue (338).

11. Procédé (1) selon l'une des revendications 1 à 10, présentant en outre :
- la réalisation (63) d'un freinage à inertie de l'ensemble routier (302) au moyen d'un dispositif de décélération de remorque (382) de la remorque (306) si une puissance de décélération continue requise (LB_Soll) pour l'ensemble routier (302) est supérieure à la puissance de décélération continue maximale admissible (LB_max).

12. Procédé (1) selon l'une des revendications 1 à 11, présentant en outre :
- l'émission (67) d'un signal d'avertissement (W) si la puissance de décélération continue maximale admissible (LB_max) est inférieure à une puissance de décélération continue techniquement possible (LB_tech) du dispositif de décélération continue (338).

13. Système d'aide à la conduite (200) pour un véhicule utilitaire (300), présentant une unité de commande pouvant être connectée à au moins un réseau de l'ensemble routier pour recevoir des signaux, et une interface avec un dispositif de décélération continue du véhicule tracteur, dans lequel le système d'aide à la conduite (200) est configuré pour exécuter le procédé (1) selon l'une des revendications 1 à 12 précédentes.

14. Véhicule utilitaire (300), présentant un dispositif de décélération continue (338) et un système d'aide à la conduite (200) selon la revendication 13.

15. Produit-programme d'ordinateur comportant des moyens formant codes de programme qui sont stockés sur un support de données lisible par ordinateur afin d'exécuter le procédé (1) selon l'une des revendications 1 à 12 lorsque le produit-programme d'ordinateur est exécuté sur une unité de calcul.
